# NEUE EUROPÄISCHE PATENTSCHRIFT

(11) **EP 2 418 184 B2**
(45) Veröffentlichungstag und Bekanntmachung des Hinweises auf die Entscheidung über den Einspruch: **17.02.2021**
(45) Hinweis auf die Patenterteilung: 10.02.2016
(21) Anmeldenummer: 11176832.1
(22) Anmeldetag: 08.08.2011
(51) Int. Cl.: C04B 11/02, C04B 28/14

(54) **Verfahren zur Herstellung von alpha-Calciumsulfat-Halbhydrat**
Method for manufacturing alpha-calcium sulphate hemi-hydrate
Procédé de fabrication de sulfate de calcium semi-hydraté alpha

(30) Priorität: 12.08.2010 EP 10172696
(43) Veröffentlichungstag der Anmeldung: 15.02.2012
(73) Patentinhaber: Lindner GFT GmbH, 97337 Dettelbach (DE)
(72) Erfinder: Aschern, Winfried, 97332 Volkach (DE)
(74) Vertreter: Blaumeier, Jörg

(56) Entgegenhaltungen:
- EP-A1- 2 036 869
- EP-A1- 2 036 869
- EP-A2- 0 110 128
- EP-A2- 0 163 963
- EP-A2- 0 163 963
- WO-A1-2012/098112
- WO-A1-2012/098112
- WO-A2-2007/024420
- DE-A1- 3 709 393
- DE-B- 1 274 488
- GB-A- 1 125 989
- JP-A- 2001 122 645
- JP-A- 2006 273 599
- US-A- 2 616 789
- US-A- 3 337 298
- US-A- 5 520 779
- US-A- 5 562 892
- US-A- 5 562 892
- US-A1- 2008 069 762
- DATABASE WPI Week 200476 Thomson Scientific, London, GB; AN 2004-770106 XP002693646, & JP 2004 307321 A (YOSHINO SEKKO KK) 4. November 2004 (2004-11-04)
- ANTE A ET AL: "Verwendungsmoeglichkeiten von Waschsaeure-Gips aus dem BMAG-Verfahren Possible use of weak acid gypsum from the BAMAG process", AUFBEREITUNGS TECHNIK, VERLAG FUER AUFBEREITUNG, WIESBADEN, DE, Bd. 49, Nr. 5, 1. Mai 2008 (2008-05-01), Seiten 21-31, XP001512497, ISSN: 0004-783X
- HARTMANN ET AL: "Alpha-Halbhydrat aus Gipsfaserplattenreststoffen", TAGUNGSBERICHT / 1. WEIMARER GIPSTAGUNG, 30. - 31. MÄRZ 2011, WEIMAR, BUNDESREPUBLIK DEUTSCHLAND = WEIMAR GYPSUM CONFERENCE, F. A. FINGER-INSTITUT FÜR BAUSTOFFKUNDE, BAUHAUS-UNIVERSITÄT WEIMAR. [RED.: H.-B. FISCHER ...], 30 March 2011 (2011-03-30), pages 261-271, XP008172307, ISBN: 978-3-00-034074-1
- W. Aschern ET AL: "Ressourcen- und Energieeffizienzsteigerung bei der Her-stellung von Gipsfaserplatten", Abschlussbericht über ein Entwicklungsprojekt, gefördert unter dem Az: 27776/02, 1 August 2011 (2011-08-01), pages 1-91, XP055142150, Retrieved from the Internet: URL:https://www.dbu.de/OPAC/ab/DBU-Abschlu ssbericht-AZ-27776_02.pdf [retrieved on 2014-09-23]
- HARTMANN et al.: "Alpha-Halbhydrat aus Gipsfaserplattenreststoffen", Tagungsbericht / 1 . Weimarer Gipstagung, pages 261-271, Weimar, Bundesrepublik Deutschland = Weimar Gypsum Conference, F. A. Finger-Institut Für Baustoffkunde, Bauhaus-Universität Weimar. ISBN: 978-3-00-034074-1
- W. ASCHERN et al.: "Ressourcen- und Energieeffizienzsteigerung bei der Herstellung von Gipsfaserplatten", Abschlussbericht über ein Entwicklungsprojekt, gefördert unter dem Az: 27776/02, August 2011 (2011-08), pages 1-91,
- HAMM, H.; et al.: "Recycling von Gipsplatten", ZKG International, vol. 60, no. 5, 2007, pages 68-74,
- HARTMANN et al.: "Recycling of gypsum-fibre-board waste by autoclaving", Proceedings of the 5th International Gypsum Conference, 8 September 2010 (2010-09-08), - 10 September 2010 (2010-09-10), pages 1-6, Kazan
- Alfred Brosig: "Alpha-hemihydrate conversion technology", Global Gypsum, December 2000 (2000-12), pages 27-28,

## Beschreibung

Die Erfindung betrifft ein Verfahren zur Herstellung von α-Calciumsulfat-Halbhydrat.

Gips ist die mineralogisch-technische Bezeichnung der chemischen Verbindung Calciumsulfat-Dihydrat (CaSO₄ × 2H₂O). Durch thermische Behandlung lässt sich der Gips in Calciumsulfat-Halbhydrat (CaSO₄ × 1/2 H₂O) überführen, wobei das Calciumsulfat-Dihydrat Teile seines gebundenen Kristallwassers verliert. Calciumsulfat-Halbhydrat besitzt die Eigenschaft, dass es bei Temperaturen unterhalb der Umwandlungstemperatur, bei Anwesenheit von Wasser, zu einer festen Masse erstarrt. Es handelt sich dabei um die Rückreaktion zu Calciumsulfat-Dihydrat.

Die Fähigkeit des Calciumsulfat-Halbhydrats, sich in die Dihydratform umwandeln und härten zu lassen, wenn es mit Wasser gemischt wird, ist die Grundlage für seine vielen Anwendungen (z. B. als Verbundplatte oder in Zement als Abbindeprüfmittel) Calciumsulfat-Halbhydrat ist in zwei chemisch-mineralogisch identischen Formen, nämlich der α- und die β-Form bekannt. α-Calciumsulfat-Halbhydrat ist in seinen physikalischen Eigenschaften, wie z. B. durch seine geringere Lösbarkeit in Wasser, von β-Calciumsulfat-Halbhydrat unterscheidbar. α-Calciumsulfat-Halbhydrat zeigt unter dem Mikroskop gut ausgebildete Kristalle. α-Calciumsulfat-Halbhydrat benötigt weniger Mischungswasser, um einen bearbeitbaren Schlamm zu bilden. Dahingegen zeigt β-Calciumsulfat-Halbhydrat unter dem Mikroskop zerklüftete Partikel der Dihydratform und weist eine hohe Oberfläche bzw. Porosität auf, welche zu einem hohen Wasseranspruch führt.

Zur Herstellung von α-Calciumsulfat-Halbhydrat sind aus dem Stand der Technik unterschiedliche Verfahren bekannt. Grundsätzlich lassen sich die zur Herstellung von α-Calciumsulfat-Halbhydrat bekannten Verfahren in Trocken- und Nassverfahren einteilen. Die Nassverfahren beruhen im Wesentlich auf der Herstellung von α-Calciumsulfat-Halbhydrat aus einer wässrigen Suspension. So kann α-Calciumsulfat-Halbhydrat, wie erwähnt, etwa durch Dehydratisierung von Gips in Wasser bei erhöhten Temperaturen und unter erhöhtem Druck oder durch Umwandlung in einer Atmosphäre von gesättigtem Wasserdampf (unter erhöhtem Druck) in einem Druckbehälter, wie einem Autoklaven, hergestellt werden.

JP2004307321 offenbart ein Verfahren zur Herstellung von α-Calciumsulfat-Halbhydrat durch die Autoklavierung von Gipskartonplattenabfall.

Es ist bekannt, als Rohstoff zur Herstellung von α-Calciumsulfat-Halbhydrat, welche Verbindung auch als abbindefähiger Gips zu bezeichnen ist, Naturgips oder technischen Gips, welcher in technischen Prozessen als Nebenprodukt anfällt, zu verwenden. Von den technischen Gipsen hat der Rauchgas-Entschwefelungs-Anlagen-Gips, kurz REA-GIPS, die größte Bedeutung. Mithin ist es grundsätzlich bekannt, in anderen technischen Prozessen anfallende Gipse, im Rahmen der Herstellung von α-Calciumsulfat-Halbhydrat einzusetzen.

Der Gedanke der Wiederverwertung entsprechender technischer Gipse als Rohstoffe für die Herstellung von α-Calciumsulfat-Halbhydrat ist mithin bekannt. Es ist jedoch fraglich, ob weitere im Rahmen technischer Verfahren und insbesondere im Zusammenhang mit der Gipsfaserplattenherstellung verbundene Nebenerzeugnisse, gleichermaßen für die Herstellung von α-Calciumsulfat-Halbhydrat geeignet sind.

Der Erfindung liegt sonach das Problem zugrunde, ein Verfahren zur Herstellung von α-Calciumsulfat-Halbhydrat anzugeben, wobei α-Calciumsulfat-Halbhydrat lediglich aus aus anderen technischen Verfahren anfallenden Nebenerzeugnissen hergestellt wird.

Das Problem wird erfindungsgemäß durch ein Verfahren mit den Merkmalen des Anspruchs 1 gelöst.

Das erfindungsgemäß vorgeschlagene Verfahren ist grundsätzlich den Nassverfahren zur Herstellung von α-Calciumsulfat-Halbhydrat zuzuschreiben. Neuartig ist hierbei die zusätzliche Verwendung von, insbesondere feinkörnigem, gipshaltigem Abfall, welcher in unterschiedlichen Formen in einer Vielzahl noch zu beschreibender Prozesse anfällt, als Rohstoff zur Bildung von α-Calciumsulfat-Halbhydrat aus einer erhitzten und druckbeaufschlagten Suspension. Das erfindungsgemäße Prinzip erweitert demnach die Palette der zur Herstellung von α-Calciumsulfat-Halbhydrat bekannten Roh- bzw. Ausgangsstoffe, wozu auch die erfindungsgemäß weiterhin verwendeten REA-Gipse zählen, um gipshaltige Abfallstoffe. Es zeigte sich bei Untersuchungen, dass das in den gipshaltigen Abfallstoffen enthaltene Calciumsulfat-Halbhydrat sich hervorragend als Keimbildner für die Herstellung von α-Calciumsulfat-Halbhydrat eignet und so die Herstellung von α-Calciumsulfat-Halbhydrat aus wässriger Suspension wesentlich begünstigt.

Vorteile der Verwendung von gipshaltigen Abfallstoffen sind beispielsweise die verbesserte Reaktivität im Vergleich zur alleinigen Verwendung von REA-Gips, das heißt schnellere Umsetzung der in der Suspension enthaltenen Stoffe zu α-Calciumsulfat-Halbhydrat, wodurch die Reaktion insgesamt weniger Energie verbraucht. Besondere apparative Vorkehrungen sind nicht vorzunehmen, das erfindungsgemäße Verfahren lässt sich in üblichen Vorrichtungen zur Herstellung von α-Calciumsulfat-Halbhydrat durchführen. Die gipshaltigen Abfallstoffe sind, wie im Weiteren gezeigt, bereits in zerkleinerter Form, insbesondere feinkörnig, vorliegend, so dass vor Herstellung der Suspension durchzuführende Zerkleinerungsvorgänge, wie z. B. Mahlvorgänge, nicht erforderlich sind.

Gipshaltige Abfallstoffe im erfindungsgemäßen Sinne sind beispielsweise gipshaltige Stäube, insbesondere von beim Bearbeiten von Gipsfaserplatten entstehende Schleif-, Fräs und Sägestäube, oder suspendierbarer bzw. zerkleinerter Gipsschlamm, der z. B. bei der Sedimentation von gipshaltigen Wässern anfällt, Gipsfaserabfall oder zerkleinerte Gipskartonabfälle oder eine Mischung der Genannten verwendet wird. Sonach können die bis dato unbrauchbaren bei der Bearbeitung, das heißt insbesondere der End- oder Nachbearbeitung, von Gipsfaserplatten anfallenden gipshaltigen Abfallstoffe als Rohstoff zur Herstellung von α-Calciumsulfat-Halbhydrat eingesetzt und somit wiederverwertet werden.

Beispiele für entsprechende gipshaltige Abfallstoffe sind. Die Aufzählung ist lediglich exemplarischer Natur und nicht abschließend.

Standard Schleifstäube (SST) aus Schleifanlagen zur Erzeugung von Gipsfaserplatten. Deren chemische Zusammensetzung weist bereits einen Anteil an Calciumsulfat-Halbhydrat auf. Eine typische Zusammensetzung enthält ca. 17 % Calciumsulfat-Halbhydrat und ca. 4 % Calciumsulfat-Anhydrit nach Röntgenbeugungsanalyse. Nach nassgravimetrischer Analyse beträgt der Anteil an Calciumsulfat-Halbhydrat ca. 14 % und ca. 7 % schwerlöslichem Calciumsulfat-Anhydrit. BET-Messungen zur Bestimmung der Oberfläche basierend auf dem Prinzip der Gasadsorption ergeben Werte ca. 9 m²/g, entsprechende Blaine-Werte zur Angabe der spezifischen Oberfläche ergeben ca. 10600 cm²/g.

Des Weiteren sind Fräs- und Sägestäube aus dem Bearbeiten von Gipsfaserplatten zu nennen. Deren chemische Zusammensetzung weist nach nassgravimetrischer Untersuchung einen Anteil von ca. 9 % Calciumsulfat-Halbhydrat und 4 % schwerlöslichem Calciumsulfat-Anhydrit auf. Der BET-Wert liegt bei ca. 3,40 m²/g, der Blaine-Wert bei ca. 12760 cm²/g. Eine typische Korngrößenverteilung ergibt Korngrößen von x₅₀ 8,5 µm, x₁₀ 1,9 µ, x₉₀ 109 µm. Nahezu ein Drittel der Partikel weist eine Korngröße von weniger als 4 µm auf.

Ein weiteres Beispiel für erfindungsgemäß verwendete gipshaltige Abfallstoffe ist Schleifstaub stark ankalzinierter Platten aus dem Bearbeiten der Gipsfaserplatten. Deren chemische Zusammensetzung weist nach nassgravimetrischer Untersuchung einen Anteil von ca. 72 % α-Calciumsulfat-Halbhydrat und 5 % schwerlösliches Calciumsulfat-Anhydrit auf. Der BET-Wert liegt bei ca. 6,94 m²/g, der Blaine-Wert bei ca. 18600 cm²/g. Eine typische Korngrößenverteilung ergibt Korngrößen von x₅₀ 10,7 µm, x₁₀ 1,6 µ, x₉₀ 115,4 µm. Nahezu ein Drittel der Partikel weist eine Korngröße von weniger als 4 µm auf.

Wie erwähnt, können auch andersartige gipshaltige Abfallstoffe, wie z. B. Gipsschlamm, Gipsfaserabfall oder zerkleinerte Gipskartonabfälle im Rahmen des erfindungsgemäßen Verfahrens verwendet werden. Selbstverständlich sind auch Mischungen der Genannten denkbar.

Grundsätzlich kann der verwendete gipshaltige Abfallstoff einen Anteil an Calciumsulfat-Halbhydrat im Bereich von 5 bis 70 %, insbesondere von 10 bis 40 %, aufweisen.

REA-Gips im erfindungsgemäßen Sinne sind beispielsweise Gipse aus entsprechenden Rauchgas-Entschwefelungs-Anlagen aus der Braunkohle- als auch Steinkohleverbrennung. Hierzu zählt etwa ein REA-Gips in Form eines Abfallprodukts aus der Kohleverstromung eines Steinkohle-REA-Gipses eines Papierwerkes. Der BET-Wert liegt bei ca. 0,75 m²/g. Eine typische Korngrößenverteilung ergibt Korngrößen von x₅₀ 45,4 µm, x₁₀ 16,9 µ, x₉₀ 96,5 µm. Circa 16 % der Partikel weist eine Korngröße von weniger als 4 µm auf. Der Anteil an Calciumsulfat-Dihydrat beträgt ca. 98 %. Das Material enthält einen Restfeuchteanteil von ca. 8 %.

Es ist vorteilhaft, wenn den gipshaltigen Stäuben ein keimbildendes Additiv, insbesondere in Form von zusätzlichem α-Calciumsulfat-Halbhydrat, zugegeben wird. Sonach kann die durch die gezielte Erhöhung des Anteils an α-Calciumsulfat-Halbhydrat in der Suspension die Keimbildung stabiler, wachstumsfähiger α-Calciumsulfat-Halbhydrat-Keime bzw. -Kristalle begünstigt und beschleunigt werden. Hierzu kann z. B. kommerzielles α-Calciumsulfat-Halbhydrat mit einem BET-Wert von ca. 0,76 m²/g bzw. einem Blaine-Wert von ca. 3500 cm²/g verwendet werden. Das eingesetzte α-Calciumsulfat-Halbhydrat kann eine typische Korngrößenverteilung von x₅₀ 18,9 µm, x₁₀ 2,1 µ, x₉₀ 46,5 µm aufweisen. Circa 4,4 % der Partikel können eine Korngröße von weniger als 4 µm aufweisen.

Die Erhitzung der Suspension erfolgt insbesondere auf eine Temperatur im Bereich von 105 bis 150°C, insbesondere im Bereich von 105 bis 135°C, bevorzugt bei 115°C oder 125°C. Mithin liegt die Prozesstemperatur bzw. Erhitzungstemperatur, das heißt die Temperatur der erhitzten Suspension zweckmäßig im Bereich von 105 bis 150°C, insbesondere im Bereich von 105 bis 135°C, bevorzugt bei 115°C oder 125°C, liegen. Selbstverständlich sind Ausnahmen nach oben und unten möglich.

Der sich einstellende Dampfdruck entspricht dem Sättigungsdampfdruck der jeweiligen Temperatur.

Es ist erfindungsgemäß vorgesehen, dass der Suspension wenigstens eine Dicarbonsäure, bevorzugt Bernsteinsäure, vorzugsweise mit einem Anteil im Bereich von 0,001 bis 1 Gew.-%, insbesondere 0,01 bis 0,2 Gew.-% bezogen auf die Feststoffe, zugegeben wird. Die Säuren beeinflussen Kristallwachstum, Kristallgröße und Kristallhabitus der hergestellten α-Calciumsulfat-Halbhydrat-Kristalle. Insbesondere ist das Aspektverhältnis, das heißt das Verhältnis von Länge zu Breite der α-Calciumsulfat-Halbhydrat-Kristalle beeinflussbar. Die Zugabe entsprechender Dicarbonsäuren ändert die Kristallform der α-Calciumsulfat-Halbhydrat-Kristalle in Richtung pseudohexagonaler prismenförmiger Kristalle, wie im Weiteren noch gezeigt wird.

Es ist ferner bevorzugt, der Suspension Aluminiumsulfat oder Eisensulfat, vorzugsweise mit einem Anteil im Bereich von 0,1 bis 2 Gew.-%, insbesondere im Bereich von 0,3 bis 1 Gew.-%, zuzugeben. Gleichermaßen ist derart Kristallwachstum, Kristallgröße, Kristallhabitus und Umwandlungsgeschwindigkeit der hergestellten α-Calciumsulfat-Halbhydrat-Kristalle gezielt beeinflussbar.

Es ist ferner vorteilhaft, der Suspension wenigstens ein Additiv auf Proteinbasis, vorzugsweise mit einem Anteil im Bereich von 0,01 bis 1 Gew.-%, insbesondere 0,01 bis 0,5 Gew.-% bezogen auf die Feststoffe, zuzugeben. Es kann sich dabei insbesondere um einen Abbindeverzögerer handeln.

Die Haltezeit zur Durchführung der Umsetzung der gipshaltigen Abfallstoffe mit REA-Gips zu α-Calciumsulfat-Halbhydrat kann im Bereich von 1 bis 90 Minuten, insbesondere 1 bis 60 Minuten, bevorzugt 1 bis 45 Minuten, liegen. Selbstverständlich sind auch hier Ausnahmen nach oben und unten denkbar.

Das erfindungsgemäße Verfahren erlaubt die Herstellung von α-Calciumsulfat-Halbhydraten mit vergleichsweise kleinen Aspekt-Verhältnissen. Je kleiner das Aspekt-Verhältnis, desto kleiner ist der Wasserbedarf bei gleichbleibender Viskosität der Suspension. Hinzu kommt, dass Wasser etwa die vierfache spezifische Wärmekapazität als Gips aufweist. Demzufolge bewirkt ein hoher Wasseranteil einen entsprechend hohen Energiebedarf bei der Beheizung entsprechender Suspensionen. Umgekehrt dazu kann ein hoher Feststoffanteil in der Suspension zu erheblichen energetischen Einsparungen bei der Beheizung der Suspension führen.

Insbesondere beträgt das zur Verwendung zur Mischung der Suspension verwendete Mischungsverhältnis von gipshaltigem Abfallstoff zu REA-Gips zwischen 10:1 und 1:10, insbesondere zwischen 3:1 und 1:3. Beispielhafte Mischungsverhältnisse sind demnach 3:1, 1:1 oder 1:3. Selbstverständlich sind auch andere Mischungsverhältnisse respektive Zusammensetzungen der Suspension zur Herstellung von α-Calciumsulfat-Halbhydrat denkbar, welche eine Darstellung von α-Calciumsulfat-Halbhydrat erlauben.

Es kann sein, dass das Erhitzen der Suspension enthaltend gleiche Anteile an gipshaltigem Abfallstoff und REA-Gips erst nach einer bestimmten Vorlagerzeit, insbesondere von 1 bis 120 Minuten, insbesondere 1 bis 60 Minuten, bevorzugt 30 Minuten, erfolgt. Die Vorlagerung kann die spezifische Oberfläche des Staubes reduzieren, wodurch bei gleichen Anteilen an gipshaltigem Abfallstoff und REA-Gips ein besser filtrierbares α-Calciumsulfat-Halbhydrat entsteht. Die Umwandlungsgeschwindigkeit lässt sich dabei unter zusätzlicher Verwendung einer Dicarbonsäure, bevorzugt Bernsteinsäure, deutlich erhöhen.

Grundsätzlich ist es denkbar, dass das Erhitzen der Suspension erst nach einer bestimmten Vorlagerzeit, insbesondere von 1 bis 120 Minuten, insbesondere 1 bis 60 Minuten, bevorzugt 30 Minuten, erfolgt.

Der Suspension wird wenigstens ein das Aspekt-Verhältnis (L/D-Verhältnis) beeinflussender, insbesondere reduzierender, Zusatzstoff, nämlich wenigstens eine Dicarbonsäure, zugegeben. Neben den vorweg genannten Dicarbonsäuren, worunter beispielsweise Bernsteinsäure oder Oxalsäure zu verstehen ist, sind somit grundsätzlich auch alle anderen geeigneten, das Aspektverhältnis beeinflussenden, insbesondere reduzierenden, Zusatzstoffe verwendbar.

Denkbar ist es auch, dass der Suspension Säuresalze, insbesondere Dicarbonsäuresalze, zugegeben werden. Die Säuresalze nehmen ebenfalls insbesondere Einfluss auf Kristallwachstum, Kristallgröße und Kristallhabitus, so dass sich die Herstellung von α-Calciumsulfat-Halbhydrat derart gezielt steuern lässt.

Es ist ebenso denkbar, der Suspension ein wachstumsbeeinflussendes Additiv, insbesondere in Form wenigstens eines Metallsalzes, insbesondere Aluminium- und/oder Eisensalzes, zugegeben wird. Das Additiv begünstigt und beschleunigt das Kristallwachstum und nimmt sonach Einfluss auf die auszubildenden α-Calciumsulfat-Halbhydrat-Kristalle.

Mit ähnlichem Zweck kann es vorgesehen sein, dass als Wasser zur Bildung der Suspension Kreislaufwasser aus der Gipsfaserplattenherstellung verwendet wird. Dabei können die in dem Kreislaufwasser enthaltenen Inhaltsstoffe genutzt werden.

Das erfindungsgemäße Verfahren kann grundsätzlich kontinuierlich oder diskontinuierlich durchgeführt werden. Unter einer diskontinuierlichen Durchführung ist insbesondere die Durchführung des Verfahrens in einem so genannten Batch-Betrieb zu verstehen.

Es ist möglich, dass der Suspension wenigstens ein weiteres Additiv aus der Gruppe: Abbindebeschleuniger, Entwässerungshilfsmittel, Entschäumer, Verflüssiger, Hydrophobierungsmittel, insbesondere Paraffine (Wachse) oder Siloxane, vorzugsweise mit einem Anteil von 1 bis 3 Gew.-%, zugeben wird. Die jeweiligen Anteile können jedoch auch höher oder niedriger ausfallen.

Denkbar ist auch die Zugabe eines Additivs in Form eines Brandschutzmittels, vorzugsweise mit einem Anteil von 1 bis 20 Gew.- %. Derjeweilige Anteil kann jedoch auch höher oder niedriger ausfallen.

Bevorzugt weist die im Rahmen des erfindungsgemäßen Verfahrens hergestellte Suspension einen Feststoffanteil im Bereich von 15 bis 70 %, insbesondere 35 bis 55 % auf. In Ausnahmen kann der Feststoffanteil auch höher oder niedriger ausfallen.

Es ist möglich, dass das die α-Calciumsulfat-Halbhydrat Suspension oder das davon abgetrennte α-Calciumsulfat-Halbhydrat einem Prozess zur Herstellung von Gipsplatten oder Gipsfaserplatten zugeführt wird, wobei das α-Calciumsulfat-Halbhydrat in eine, gegebenenfalls bereits anderweitig hergestellte Calciumsulfat-Halbhydrat enthaltende, Gipsmischung oder Gipsfasermischung eingearbeitet wird und aus der Gipsmischung oder der Gipsfasermischung Gipsplatten oder Gipsfaserplatten hergestellt werden. Die anderweitig hergestellte Calciumsulfat-Halbhydrat enthaltende Gipsmischung oder Gipsfasermischung kann Gipsbindemittel wie α-Calciumsulfat-Halbhydrat, β-Calciumsulfat-Halbhydrat oder Calciumsulfat-Anhydrit enthalten. Das erfindungsgemäß hergestellte α-Calciumsulfat-Halbhydrat ist sonach nur einen Teil der Gipsmischung oder Gipsfasermischung darstellt.

Es ist denkbar, dass die α-Calciumsulfat-Halbhydrat Suspension vor Einarbeitung in die Gipsmischung oder Gipsfasermischung in einem beheizbaren Rührbehälter, insbesondere bei Temperaturen im Bereich von 65 bis 100°C, bevorzugt im Bereich von 85 bis 95°C, gelagert wird. Es handelt sich dabei um eine Zwischenlagerung, in welcher die hergestellte α-Calciumsulfat-Halbhydrat Suspension für die weitere Verarbeitung auf Temperatur gehalten und konditioniert wird.

Weitere Vorteile, Merkmale und Einzelheiten der Erfindung ergeben sich aus den im Folgenden anhand von Untersuchungen dargestellten Ausführungsformen. Sowie anhand der Zeichnungen. Dabei zeigt:
- Fig. 1: einen Verlauf des Kristallwassergehalts gegen die Haltezeit für α-Calcimsulfat-Halbhydrat erzeugt aus Standard-Schleifstaub, der bei 115°C Solltemperatur in einer wässrigen Suspension mit unterschiedlichen Zusätzen und ohne Zusätze behandelt wurde;
- Fig. 2: mikroskopische Darstellungen von α-Calciumsulfat-Halbhydrat-Kristallen des bei 105°C mit 0 (oben) und 30 Minuten (unten) Haltezeit in einer wässrigen Suspension ohne Zusätze umgewandelten Standard-Schleifstaubes;
- Fig. 3: einen Verlauf des Kristallwassergehalts gegen die Haltezeit für α-Calciumsulfat-Halbhydrat erzeugt aus Standard-Schleifstaub, der bei 105°C Solltemperatur in einer wässrigen Suspension mit unterschiedlichen Zusätzen und ohne Zusätze behandelt wurde;
- Fig. 4: einen Verlauf der Wärmerate und Wärmemenge gegen die Zeit für α-Calciumsulfat-Halbhydrat erzeugt aus einem Standard-Schleifstaub, der in einer wässrigen Suspension bei 105°C für unterschiedliche Haltezeiten ohne Zusätze behandelt wurde;
- Fig. 5: einen Verlauf der Wärmerate und Wärmemenge gegen die Zeit für einen Frässtaub, der in einer wässrigen Suspension bei 105°C mit 10 und 30 Minuten Haltezeit ohne Zusätze behandelt wurde;
- Fig. 6: mikroskopische Darstellungen von α-Calciumsulfat-Halbhydrat-Kristallen des bei 115°C mit 0 (oben) und 30 Minuten (unten) Haltezeit in einer wässrigen Suspension mit Zusatz von 0,1 % Bernsteinsäure umgewandelten Standard-Schleifstaubes;
- Fig. 7: mikroskopische Darstellungen von α-Calciumsulfat-Halbhydrat-Kristallen des bei 115°C mit 10 Minuten Haltezeit in einer wässrigen Suspension umgewandelten Frässtaubes mit weniger als 10 % Calciumsulfat-Halbhydrat im Staub (oben) und des bei gleichen Bedingungen umgewandelten Schleifstaubes mit ca. 70 % Calciumsulfat-Halbhydrat im Staub (unten);
- Fig. 8: mikroskopische Darstellungen von α-Calciumsulfat-Halbhydrat-Kristallen und nicht umgewandeltem Calciumsulfat-Dihydrat des bei 105°C mit 10 Minuten (links) und 30 Minuten (rechts) in einer wässrigen Suspension ohne Zusätze behandelten Frässtaubes mit weniger als 10 % Calciumsulfat-Halbhydrat im Staub;
- Fig. 9: einen Verlauf des Kristallwassergehalts gegen die Haltezeit für α-Calciumsulfat-Halbhydrat erzeugt aus einem Steinkohle-REA-Gips, der bei 115 bis 135°C Solltemperatur in einer wässrigen Suspension ohne Zusätze behandelt wurde;
- Fig. 10: einen Verlauf des Kristallwassergehalts gegen die Haltezeit für α-Calciumsulfat-Halbhydrat erzeugt aus einem Steinkohle-REA-Gips, der bei 125°C Solltemperatur in einer wässrigen Suspension mit unterschiedlichen Zusätzen behandelt wurde;
- Fig. 11: mikroskopische Darstellungen von α-Calciumsulfat-Halbhydrat-Kristallen des bei 120°C mit 60 Minuten Haltezeit in einer wässrigen Suspension behandelten Steinkohle-REA-Gipses;
- Fig. 12: mikroskopische Darstellungen von α-Calciumsulfat-Halbhydrat-Kristallen des bei 125°C mit 60 Minuten Haltezeit in einer wässrigen Suspension behandelten Steinkohle-REA-Gipses mit Zusatz von 0,1 % Bernsteinsäure;
- Fig. 13: einen Verlauf der Wärmerate und Wärmemenge gegen die Zeit für α-Calciumsulfat-Halbhydrat erzeugt aus einem Steinkohle-REA-Gips, der in einer wässrigen Suspension bei 120°C für 10 und 60 Minuten ohne Zusätze behandelt wurde;
- Fig. 14: einen Verlauf der Wärmerate und Wärmemenge gegen die Zeit für α-Calciumsulfat-Halbhydrat erzeugt aus einem Steinkohle-REA-Gips, der in einer wässrigen Suspension bei 125°C für 60 Minuten mit Zusatz von 0,1 % Bernsteinsäure und 1 % Aluminiumsulfat behandelt wurde;
- Fig. 15: mikroskopische Darstellungen von α-Calciumsulfat-Halbhydrat-Kristallen des bei 125°C mit 60 Minuten Haltezeit in einer wässrigen Suspension behandelten Steinkohle-REA-Gipses mit Zusatz von 0,1 % Abbindeverzögerer Aminoplus auf Proteinbasis; .
- Fig. 16: mikroskopische Darstellungen von α-Calciumsulfat-Halbhydrat-Kristallen der bei 125°C mit 60 Minuten Haltezeit in einer wässrigen Suspension nach zweistündiger Vorlagerung bei Raumtemperatur behandelten Mischung aus 50 % Steinkohle-REA-Gips und 50 % Standard-Schleifstaub mit Zusatz von 0,1 % Bernsteinsäure;
- Fig. 17: einen Verlauf der Wärmerate und Wärmemenge gegen die Zeit von α-Calciumsulfat-Halbhydrat aus Steinkohle-REA-Gips, der in einer wässrigen Suspension bei 125°C für 60 Minuten mit Zusatz von 0,1 % Bernsteinsäure behandelt wurde (Kennzeichnung 5F) und von α-Calciumsulfat-Halbhydrat aus einer Mischung von 50 % Steinkohle-REA-Gips und 50 % Standard-Schleifstaub, der in einer wässrigen Suspension bei 125°C für 10 und 60 Minuten (Kennzeichnung 1_5F) mit Zusatz von 0,1 % Bernsteinsäure behandelt wurde;
- Fig. 18: mikroskopische Darstellungen von α-Calciumsulfat-Halbhydrat-Kristallen des bei 125°C mit 60 Minuten Haltezeit behandelten Mischung aus 90 % Standard-Schleifstaub und 10 % α-Calciumsulfat-Halbhydrat ohne zweistündige Vorlagerung in Wasser;
- Fig. 19: mikroskopische Darstellungen von α-Calciumsulfat-Halbhydrat-Kristallen von bei 125°C mit 60 Minuten Haltezeit behandeltem reinem Steinkohle-REA-Gips mit Zugabe von 0,1 % Bernsteinsäure;
- Fig. 20: mikroskopische Darstellungen von α-Calciumsulfat-Halbhydrat-Kristallen einer bei 125°C mit 10 Minuten Haltezeit behandelten Mischung aus 50 % Gipsfaserstaub und 50 % Steinkohle-REA-Gips und mit Zugabe von 0,1 %Bernsteinsäure in einer Frischwasser-Suspension;
- Fig. 21: mikroskopische Darstellungen von α-Calciumsulfat-Halbhydrat-Kristallen von bei 125°C mit 30 Minuten Haltezeit behandelten Mischung aus 75 % Gipsfaserstaub und 25 % Steinkohle-REA-Gips mit Zugabe von 0,1 % Bernsteinsäure;
- Fig. 22: mikroskopische Darstellungen von α-Calciumsulfat-Halbhydrat-Kristallen von bei 125°C mit 30 Minuten Haltezeit behandelten Mischung aus 25 % Gipsfaserstaub und 75 % Steinkohle-REA-Gips mit Zugabe von 0,1 % Bernsteinsäure;
- Fig. 23: mikroskopische Darstellungen von α-Calciumsulfat-Halbhydrat-Kristallen von bei 125°C mit 30 Minuten Haltezeit behandelten Mischung aus 75 % Gipsfaserstaub und 25 % Steinkohle-REA-Gips mit Zugabe von 0,1 % Bernsteinsäure;
- Fig. 24: mikroskopische Darstellungen von α-Calciumsulfat-Halbhydrat-Kristallen von bei 115°C mit 30 Minuten Haltezeit behandelten reinem Gipsfaserstaub mit Zugabe von 0,1 % Bernsteinsäure in Frischwasser;
- Fig. 25: mikroskopische Darstellungen von α-Calciumsulfat-Halbhydrat-Kristallen von bei 115°C mit 15 Minuten Haltezeit behandelten reinem Gipsfaserstaub mit Zugabe von 0,1 % Bernsteinsäure in Kreislaufwasser;
- Fig. 26: mikroskopische Darstellungen von α-Calciumsulfat-Halbhydrat-Kristallen von bei 115°C mit 15 Minuten Haltezeit behandelten reinem Gipsfaserstaub mit Zugabe von 0,1 % Bernsteinsäure in Kreislaufwasser;
- Fig. 27: mikroskopische Darstellungen von α-Calciumsulfat-Halbhydrat-Kristallen von bei 125°C mit 30 Minuten Haltezeit behandelten Mischung aus 50 % getrocknetem Gipssedimentationsschlamm und und 50 % Steinkohle-REA-Gips mit Zugabe von 0,1 % Bernsteinsäure;
- Fig. 28: mikroskopische Darstellungen von α-Calciumsulfat-Halbhydrat-Kristallen von bei 125°C mit 60 Minuten Haltezeit behandelten Mischung aus 50 % Gipsfaserstaub und 50 % Steinkohle-REA-Gips in Frischwasser;
- Fig. 29: mikroskopische Darstellungen von α-Calciumsulfat-Halbhydrat-Kristallen von bei 125°C mit 60 Minuten Haltezeit behandelten Mischung aus 50 % Gipsfaserstaub und 50 % Steinkohle-REA-Gips in Kreislaufwasser;
- Fig. 30: mikroskopische Darstellungen von α-Calciumsulfat-Halbhydrat-Kristallen von bei 125°C mit 40 Minuten Haltezeit behandelten Mischung aus 50 % Gipsfaserstaub und 50 % Steinkohle-REA-Gips unter Zugabe von 0,1 % Bernsteinsäure in Kreislaufwasser;
- Fig. 31: eine Tabelle zur Darstellung der Ergebnisse aus der Rückführung der α-Calciumsulfat-Halbhydrat Suspension aus 50 % REA, 50 % Standard-Schleifstaub, 0,1 % Bernsteinsäure, Faserqualität 2 (Tetra Pak) mit 20 %igen und 100 %igen Anteil in der Trockenmischung;
- Fig. 32: eine Tabelle zur Darstellung der Ergebnisse aus der Rückführung der α-Calciumsulfat-Halbhydrat Suspension aus 50 % REA, 50 % SS, 0,1 % BS, FQ2 (Tetra Pak) mit 40%igen Anteil in der Trockenmischung;
- Fig. 33: eine Tabelle zur Darstellung des Einflusses der Staub-REA-Menge ohne zweistündige Vorlagerung mit Zusatz von 0,1 %Bernsteinsäure: K-Wert, Restwassergehalt und Blaine-Wert für jeweils 60-minütige Haltezeit bei 125 °C;
- Fig. 34: eine Tabelle zur Darstellung des Einflusses des Bernsteinsäurezusatzes ohne zweistündige Vorlagerung mit 50 % Staub und 50 % REA: K-Wert, Restwassergehalt und Blaine-Wert für jeweils 60-minütige Haltezeit bei 125 °C;
- Fig. 35: eine Tabelle zur Darstellung des Einflusses der Lagerungszeit der Staubsuspension im Wasser auf die BET-Oberfläche und den Kristallwassergehalt;
- Fig. 36: eine Tabelle zur Darstellung des aus den Rohstoffen REA-Gips aus Schleifstaub und Abmischungen daraus mit und ohne Bernsteinsäurezusatzerzeugten α-Calciumsulfat-Halbhydrats und Eigenschaften der damit erzeugten Gipsfaserproben; und
- Fig. 37: eine Tabelle zur Darstellung der Ergebnisse der Einarbeitung der α-Calciumsulfat-Halbhydrat Suspension aus REA-Gips und Schleifstaub, jeweils mit Zusatz von 0,1 % Bernsteinsäure bezogen auf die eingesetzten Gipse.

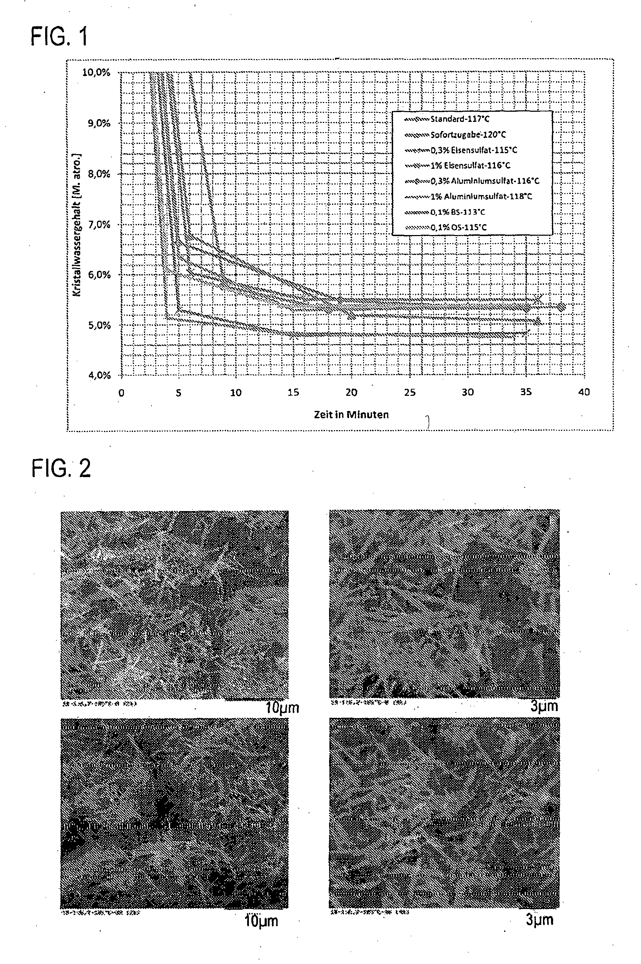

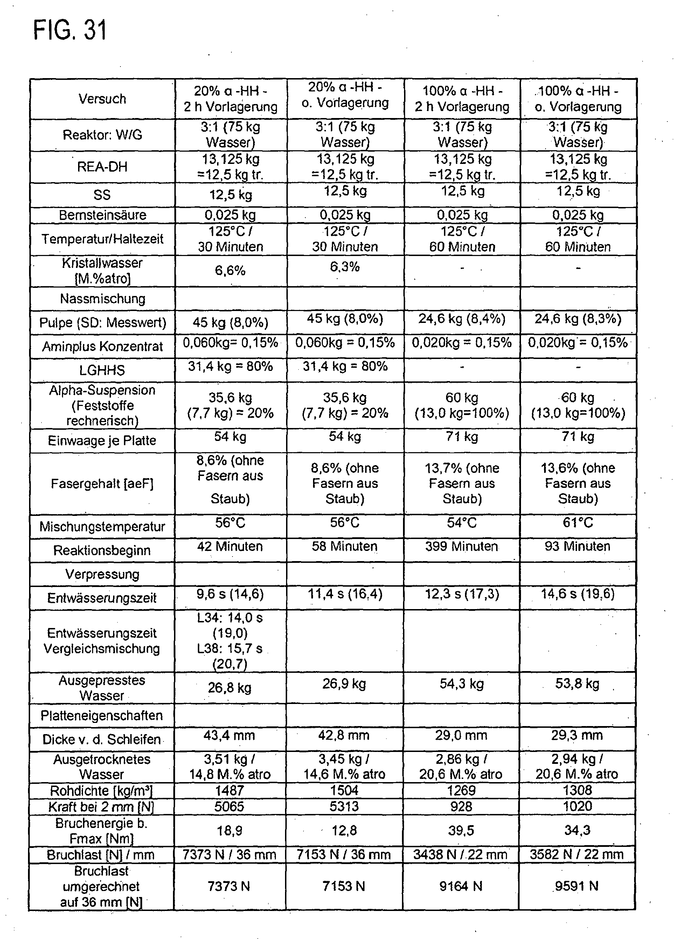

Nachfolgende Ausführungen betreffen eine erste Untersuchungsreihe zum erfindungsgemäßen Verfahren. Der ersten Untersuchungsreihe sind die in den Fig. 1 bis 18 sowie in den Fig. 31 bis 3544 gezeigten Ergebnisse zugehörig.

### 1. Untersuchungsreihe

Die Durchführung des erfindungsgemäßen Verfahrens, das heißt die Herstellung von α-Calciumsulfat-Halbhydrat wurde in einem Druck-Rührbehälter (Rührautoklav) mit einem maximalen Gesamtinhalt von 164 l mit Ankerrührwerk durchgeführt. Es wurden Suspensionen mit unterschiedlichen Wasser-zu-Gips-Verhältnissen (W/G-Werten) einer thermischen Behandlung unterzogen. Dabei wurden den Suspensionen wahlweise Additive mit vorher festgelegten Gewichtsanteilen bezogen auf den Gips zugesetzt. Nach Erreichen einer festgelegten Zieltemperatur wurde die heiße Suspension nach unterschiedlichen Haltezeiten aus dem Druck-Rührbehälter abgelassen. Die Haltezeit wird ab Erreichen der Zieltemperatur (Zeit t = 0 Minuten) berechnet.

Damit keine Umwandlung des erzeugten α-Calciumsulfat-Halbhydrat zu Calciumsulfat-Dihydrat erfolgt, wurde die heiße Suspension sofort filtriert und anschließend mehrfach mit Spiritus gespült / filtriert und abschließend mit Aceton gespült. Es erfolgte die Trocknung des Filterkuchens bei 40°C. Der erzeugte Filterkuchen wurde für die analytischen Untersuchungen verwendet.

Es wurden folgende Untersuchungen durchgeführt:
- Phasenbestand: mit Röntgenbeugungsanalyse mit nassgravimetrischer Phasenanalyse und teilweise mit thermischer Analyse
- Kristallgröße und Kristallform: mit Rasterelektronenenmikroskop (REM) und teilweise mit Stereomikroskopie
- Umwandlungsgeschwindigkeit der behandelten Suspensionen: mit gravimetrischer Kristallwasserbestimmung
- Reaktivität: mit Differentialkalorimetrie (DCA)
- Korngrößenanalyse: Laser-Partikelgrößenanalysator Coulter LS230 mit 2-Propanol
- Oberfläche: spezifische Oberfläche nach Blaine und Oberfläche mit BET, wobei die Bestimmung der spezifischen Oberfläche nach Blaine prinzipiell über die Messung einer Zeitdauer, welche eine vorgegebene Gasmenge benötigt, um durch eine bestimmte Menge des zu vermessenden Stoffs zu strömen erfolgt. Gemäß dem BET-Prinzip erfolgt die Bestimmung der spezifischen Oberfläche auf Gasadsorptionsverfahren beruht. Beide Verfahren sind an und für sich zur Bestimmung der spezifischen Oberfläche bekannt.
- Prüfung der Filtrationsgeschwindigkeit: mit Druckfiltration. Hierbei wurden 50 g des zu untersuchenden Produktes mit 500 g Wasser mild gemischt und anschließend mit festgelegter Filterfläche mit 1 bar Druckluft beaufschlagt. Die filtrierte Wassermenge wurde zeitabhängig gemessen. Aus der Auftragung der Filtratmenge gegen die Wurzel aus der Zeit ergibt sich i. A. eine Gerade. Die Steigung der Geraden ergibt den K-Wert und ist ein Maß für die Filtrationsgeschwindigkeit. Weiterhin wurde die Gesamtfiltratmenge nach Ablauf der Filtrationszeit ermittelt.

Als Ausgangsmaterialien respektive Rohstoffe wurden verwendet:
- Standard Schleifstäube (SST) aus Schleifanlagen zur Erzeugung von Gipsfaserplatten. Deren chemische Zusammensetzung wies einen Anteil an α-Calciumsulfat-Halbhydrat auf. Eine typische Zusammensetzung enthielt ca. 17 % Calciumsulfat-Halbhydrat und ca. 4 % Calciumsulfat-Anhydrit nach Röntgenbeugungsanalyse. Nach nassgravimetrischer Analyse betrug der Anteil an Calciumsulfat-Halbhydrat ca. 14 % und ca. 7 % an schwerlöslichem Calciumsulfat-Anhydrit. BET-Messungen zur Bestimmung der Oberfläche ergaben Werte von ca. 9 m²/g, entsprechende Blaine-Werte ergaben ca. 10600 cm²/g.
- Fräs- und Sägestäube aus dem Bearbeiten von Gipsfaserplatten. Deren chemische Zusammensetzung wies nach nassgravimetrischer Untersuchung einen Anteil von ca. 9 % Calciumsulfat-Halbhydrat und 4 % schwerlöslichem Calciumsulfat-Anhydrit auf. Der BET-Wert lag bei ca. 3,40 m²/g, der Blaine-Wert bei ca. 12760 cm²/g. Eine typische Korngrößenverteilung ergab Korngrößen von x₅₀ 8,5 µm, x₁₀ 1,9 µ, x₉₀ 108,9 µm. Nahezu ein Drittel der Partikel wies eine Korngröße von weniger als 4 µm auf.
- Schleifstaub stark ankalzinierter Platten aus dem Bearbeiten von Gipsfaserplatten. Deren chemische Zusammensetzung wies nach nassgravimetrischer Untersuchung einen Anteil von ca. 72 % α-Calciumsulfat-Halbhydrat und 5 % schwerlöslichem Calciumsulfat-Anhydrit auf. Der BET-Wert lag bei ca. 6,94 m²/g, der Blaine-Wert bei ca. 18600 cm²/g. Eine typische Korngrößenverteilung ergab Korngrößen von x₅₀ 10,7 µm, x₁₀ 1,6 µ, x₉₀ 115,4 µm. Nahezu ein Drittel der Partikel wies eine Korngröße von weniger als 4 µm auf.
- REA-Gips als Abfallprodukt aus der Kohleverstromung eines Papierwerkes. Der BET-Wert lag bei ca. 0,75 m²/g. Eine typische Korngrößenverteilung ergab Korngrößen von x₅₀ 45,4 µm, x₁₀ 16,9 µ, x₉₀ 96,5 µm. Circa 16 % der Partikel wies eine Korngröße von weniger als 4 µm auf. Der Anteil an Calciumsulfat-Dihydrat betrug ca. 98 %. Das Material enthielt einen Restfeuchteanteil von ca. 8 %.
- kommerzielles α-Calciumsulfat-Halbhydrat mit einem BET-Wert von ca. 0,76 g/cm² und einem Blaine-Wert von ca. 3500 g/cm². Eine typische Korngrößenverteilung ergab Korngrößen von x₅₀ 18,9 µm, x₁₀ 2,1 µm, x₉₀ 46,5 µm. Circa 4,4 % der Partikel wies eine Korngröße von weniger als 4 µm auf.

### 1.1 Erstes Arbeitspaket (vgl. Fig. 1 bis 8)

In einem ersten Arbeitspaket der ersten Untersuchungsreihe wurden Untersuchungen mit den hauptsächlich anfallenden Schleifstäuben mit ca. 17 % α-Calciumsulfat-Halbhydrat und ca. 4 % Calciumsulfat-Anhydrit durchgeführt. Die Ergebnisse des ersten Arbeitspakets sind in den Figuren 1 bis 8 dargestellt. Bei der in **Fig. 1** gezeigten Messreihe wurde bei 0 Minuten erstmals 100 C erreicht, beim ersten eingezeichneten Messpunkt der jeweiligen Messkurve (nach 4 bis 9 Minuten) wurde erstmals 115°C +/- 2°C erreicht. Es zeigte sich, dass das Calciumsulfat-Dihydrat im Schleifstaub sich bis auf einen Restanteil von ca. 2 bis 4% unmittelbar nach Erreichen (t= 0 Minuten) der Zieltemperatur 115°C zu α-Calciumsulfat-Halbhydrat umwandelt. Es zeigte sich ferner, dass die Umwandlung 10 Minuten (15 bis 18 Minutenwert in **Fig.1**) nach Erreichen der Zieltemperatur abgeschlossen ist, es liegt kein mit Röntgenbeugungsanalyse nachweisbares Calciumsulfat-Dihydrat vor. Es wurde festgestellt, dass die erzeugten α-Calciumsulfat-Halbhydrat Suspensionen eine deutlich höhere Viskosität als die nicht umgewandelte Schleifstaub-Wasser-Suspension aufwies. Dadurch muss die Mischung mit hoher Wasserverdünnung verarbeitet werden, um fließfähig zu bleiben.

Wie aus den Abbildungen in **Fig. 2** ersichtlich ist, sind die gebildeten Kristalle nadelförmig und weisen Längen von 1-10 µm, typisch von 3-5 µm und Dicken bzw. Durchmesser von 0,1-1 µm, typisch von 0,3-0,5 µm auf. Das Aspektverhältnis (Verhältnis der Länge der Kristalle zum Durchmesser der Kristalle, kurz L/D-Verhältnis) beträgt ungefähr 10:1 bis 15:1. Der Blaine-Wert beträgt ca. 30000 cm²/g. Die geringen Kristallabmessungen deuten auf eine hohe Keimbildungsrate und ein geringes Kristallwachstum hin. Eine Verschiebung zu höheren Wachstumsraten und geringerer Keimbildungsrate (typisch für geringere Übersättigungen) war durch eine Temperatursenkung auf 105°C und durch zugesetzte Additive nicht erreichbar.

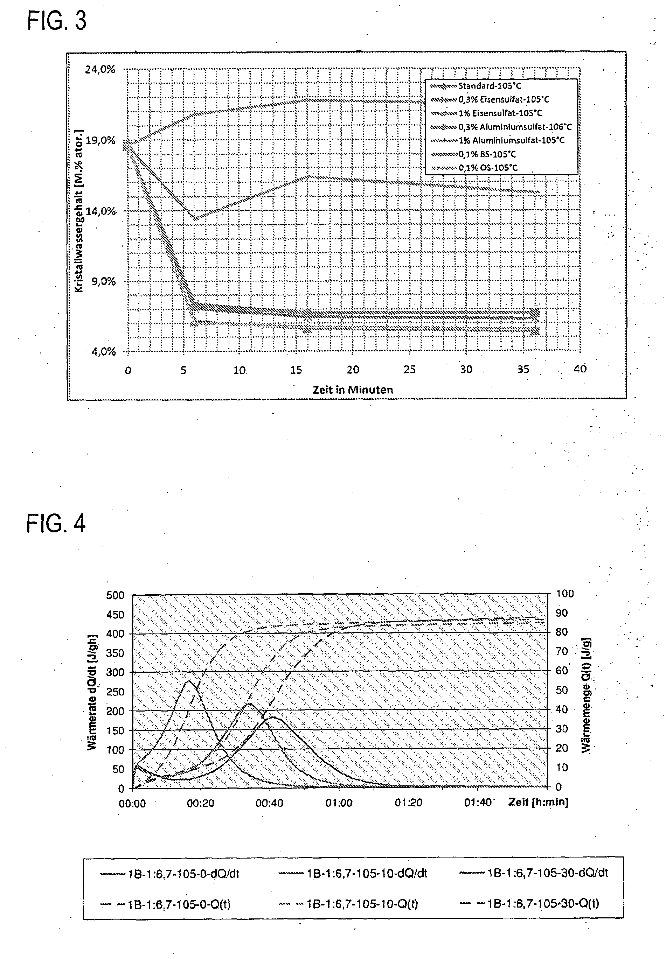

Bei der in **Fig. 3** gezeigten Messreihe wurde bei 0 Minuten erstmals 100°C erreicht, beim ersten eingezeichneten Messpunkt der jeweiligen Messkurve (nach 6 Minuten) wurde erstmals 105°C +/- 1°C erreicht. Wie aus **Fig. 3** zu erkennen ist, erfolgte bei 105°C entweder eine ähnlich schnelle Umsetzung wie bei 115°C (bei Zusatz von 0,3 % Aluminiumsulfat, 0,3 % und 1 % Eisensulfat, 0,1 % Oxalsäure und ohne Zusatz) mit vergleichbaren Kristallabmessungen oder aber das Produkt wandelte sich auch nach 30-minütiger Haltezeit nicht um (mit 1 % Aluminiumsulfat, mit 0,1 % Bernsteinsäure z. B. nach 30 Minuten Haltezeit ca. 38 % α-Calciumsulfat-Halbhydrat, 56 % Calciumsulfat-Dihydrat, 6 % Anhydrit).

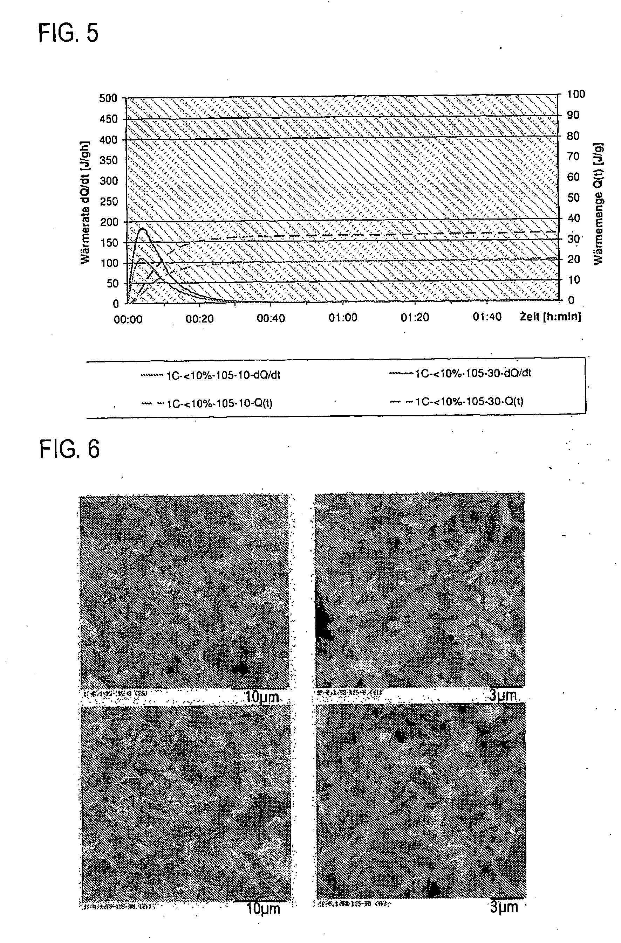

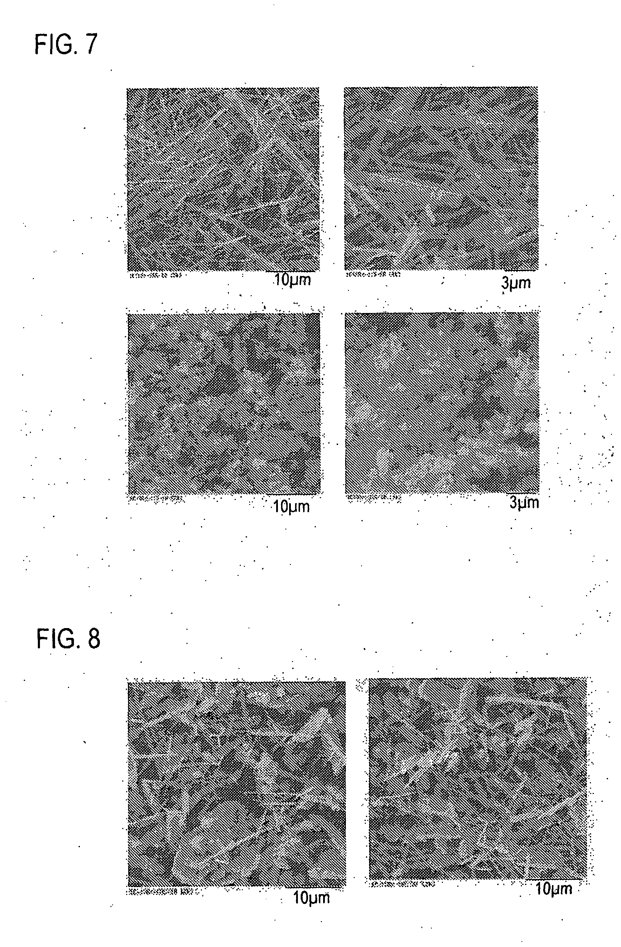

In den **Fig. 4****,** **Fig. 5** ist die Wärmerate (durchgezogene Linie, linke Ordinate) sowie die Wärmemenge (gestrichelte Linie, rechte Ordinate) für unterschiedliche Proben gegen die Zeit aufgetragen. Aus **Fig. 5** ist zu erkennen, dass der Gipsfaserstaub mit weniger als 10 % Anteil an Calciumsulfat-Halbhydrat (Frässtaub) nach 10 Minuten Haltezeit bei 105°C und anschließender Rehydratation eine Wärmemenge von 21 J/g (vgl. bei 115°C: 82 J/g) aufweist. Nach einer Haltezeit von 30 Minuten beträgt die Wärmemenge 34 J/g (vgl. gleicher Staub bei 115°C: 94 J/g = 100%ige Umwandlung). Auch in **Fig. 8** ist erkennbar, dass eine Umwandlung nicht vollständig erfolgt ist.

Wie sich insbesondere aus den Abbildungen der **Fig. 6** ergibt, beeinflussen die verwendeten Zusätze die Kristallgröße und den Kristallhabitus nicht erkennbar. Eine Ausnahme war bei Zugabe von 0,1 % Bernsteinsäure bei 115°C zu erkennen. Es ergaben sich kleine Kristalle mit einer Länge L von 1-5 µm, typisch 3 µm, und einem Durchmesser D im von 0,3-1,1 µm, typisch 0,5 µm. Das L/D-Verhältnis lag bei ca. 6:1.

Es konnte ein Einfluss der Zusammensetzung des Schleifstaubes erkannt werden. Geringe Gehalte an Calciumsulfat-Halbhydrat kleiner 10 % im Ausgangsmaterial sorgen für größere, auch nadelförmige Kristalle (L= 6-28 µm, typisch 17 µm, D=0,4 -2,2 µm, typisch 0,8 µm, L/D = ca. 20:1). Hohe Gehalte an Calciumsulfat-Halbhydrat von 70 % sorgen für größtenteils gedrungene, fast würfelförmige Kristalle von typischerweise 0,5 bis 1 µm Kantenlänge. Diese agglomerieren häufig (vgl. die Abbildungen in **Fig. 7**).

Die Reaktionsgeschwindigkeit des gebildeten α-Calciumsulfat-Halbhydrats ist aufgrund des geringen Anteiles an Calciumsulfat-Dihydrat von 2-4 % sehr hoch bei 0 Minuten Haltezeit (entspricht einer sofortigen Reaktion, Maximum bei ca. 10 Minuten, vollständige Umsetzung nach 30-40 Minuten). Nach 10 bis 30-minütiger oder längerer Haltezeit verlangsamt sich die Reaktionsgeschwindigkeit, das Reaktionsmaximum liegt bei ca. 50 bis 70 Minuten).

Aufgrund der ungünstigen nadelförmigen Kristalle und der geringen Kristallgröße stellte sich eine langsame, unzureichende Filtration ein. Dabei ist die Filtration bei Verwendung des Staubes mit sehr geringem Anteil an Calciumsulfat-Halbhydrat (größere, aber nadelförmige Kristalle) und bei Verwendung des Staubes mit sehr hohem Anteil an Calciumsulfat-Halbhydrat (kubische, aber sehr kleine Kristalle) am höchsten. Durch Zugabe von Bernsteinsäure reduziert sich das L/D-Verhältnis der Kristalle signifikant, die Filtrierbarkeit bleibt jedoch aufgrund der geringen Kristallgröße unverändert schlecht.

Die Rückführung der hergestellten α-Calciumsulfat-Halbhydrat Suspension in die Produktionsmischung aus dem Standard Schleifstaub mit einem 20 %-igen Anteil des Calciumsulfat-Halbhydrats bezogen auf die eingesetzte Trockenmischung bringt negative Ergebnisse. Die Filtrationszeiten und die Menge des auszutrocknenden Wassers steigen gegenüber der normalen Produktionsmischung, die Dichten der Endprodukte sinken, die Bruchlasten bleiben etwa gleich. Eine wirtschaftliche Rückführung ist so nicht möglich.

### 1.2 Zweites Arbeitspaket

Aus den Ergebnissen eines ebenso der ersten Untersuchungsreihe zuzuordnenden zweiten Arbeitspaketes ergibt sich, dass durch Verwendung des an mineralischer Komponente angereicherten Feingutes keine Verbesserungen möglich sind. Nicht die Fasern stellen das Problem dar, sondern die feinen nadelförmigen Kristalle. Dies wird durch den hohen Feinanteil im Bindemittel und die dadurch hervorgerufene spontane Keimbildung verursacht. Das zweite Arbeitspaket wird aufgrund der geringen Erfolgsaussichten und Verbesserungen gegenüber dem nicht behandelten Staub nicht weiterverfolgt.

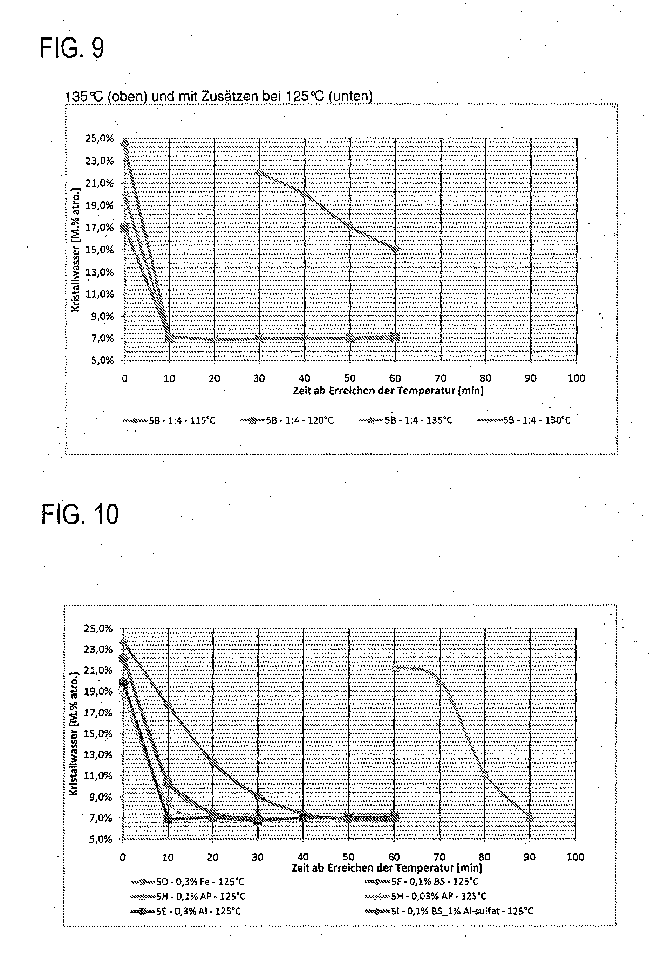

### 1.3 Drittes Arbeitspaket (vgl. Fig. 9 bis 15)

In einem dritten Arbeitspaket wurden die in den Fig. 9-15 dargestellten Ergebnisse mit REA-Gips als Rohstoff erhalten. Wie aus den **Fig. 9, 10** ersichtlich ist, ist für die schnelle, vollständige Umwandlung des Rohstoffes ohne Zusatzstoffe zu α-Calciumsulfat-Halbhydrat eine Temperatur von mindestens 120°C erforderlich. Die erforderliche Zeit zur vollständigen Umwandlung beträgt im Temperaturbereich 120-135°C etwa 10 bis 20 Minuten, wobei sich die BET Oberfläche zwischen 10 Minuten (2,1 m²/g) und 60 Minuten (0,8 m²/g) Umwandlungsdauer signifikant reduziert.

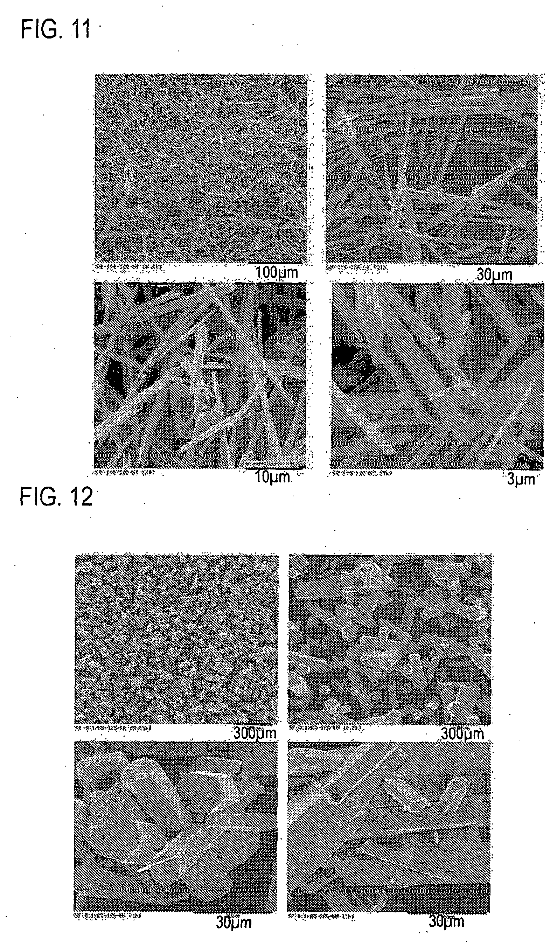

Die gebildeten Kristalle sind alle nadelförmig und weisen Längen von 10-130 µm, typisch 50 µm auf. Das L/D-Verhältnis variiert von 10:1 bis 25:1 und beträgt typisch 15:1 (vgl. **Fig. 11**). Der Blaine-Wert beträgt ca. 10500 cm²/g.

Die Filtrationsgeschwindigkeit ist trotz des nadeligen Habitus und der hohen spezifischen Oberfläche schneller als bei dem kommerziell verfügbaren α-Calciumsulfat-Halbhydrat mit einem Blaine-Wert von ca. 3500 cm²/g, der Filterkuchen bindet aber mehr Restwasser. Das Reaktionsmaximum der bei 120°C nach 10 Minuten Behandlungsdauer erzeugten Probe liegt bei 53 Minuten, das der nach 60 Minuten erzeugten Probe bei 75 Minuten, wobei nach drei Stunden mit ca. 93 J/g eine vollständige Umsetzung erfolgt ist.

Bei 115°C ist die Umwandlung auch nach 60 Minuten nur zu ca. 50 % erfolgt. Die gebildeten nadelförmigen Umwandlungsprodukte sind deutlich größer als bei 120-135°C (Länge bis zu ca. 500 µm). Ein Zusatz von 0,3 % Aluminiumsulfat erhöht die Umwandlungsgeschwindigkeit (nach 10 Minuten abgeschlossen), die α-Calciumsulfat-Halbhydrat-Kristalle weisen aber gleiche Längen und einen vergleichbaren nadelförmigen Habitus auf. Ein Zusatz von 0,3 % Eisensulfat bewirkt feinere Nadeln mit L/D-Verhältnissen von 20:1 bis 40:1, typisch von 25. Die spezifische Oberfläche erhöht sich auf ca. 14000 cm²/g, die Filtration erfolgt langsamer, vergleichbar zu dem kommerziell verfügbaren α-Calciumsulfat-Halbhydrat mit ca. 4000 cm²/g.

Der Zusatz von 0,1 % Bernsteinsäure verlängert die Umwandlungsgeschwindigkeit auf ca. 40-50 Minuten. Die gebildeten Kristalle weisen die Form von pseudohexagonalen Prismen mit einer Länge von im Mittel 80 µm (15-150 µm) und einem L/D-Verhältnis von 2:1 bis 6:1, typisch 4:1 auf (vgl. **Fig. 12**). Der Blaine-Wert beträgt ca. 1000 cm²/g, die BET-Oberfläche 0,4 m²/g (60 Minuten), die Filtration ist etwa sechsmal so schnell wie die des kommerziell verfügbaren α-Calciumsulfat-Halbhydrats, das Material reagiert jedoch nur sehr langsam, das Reaktionsmaximum des erzeugten α-Calciumsulfat-Halbhydrat liegt bei über 180 Minuten, wobei nach 180 Minuten mit 45 J/g eine Umsetzung nur zu ca. 50% erfolgt ist. Die erzeugten Kristalle sind erfahrungsgemäß zu groß, um gute Festigkeiten bei Gipsfaserprodukten zu ermöglichen (ohne Mahlung nicht geeignet).

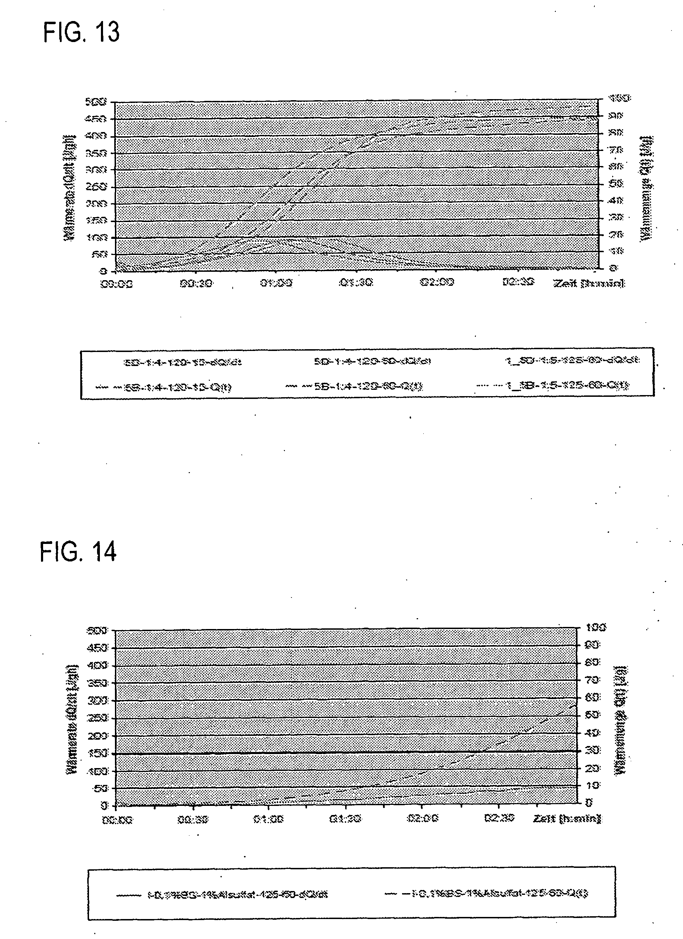

Bei Zugabe von 0,1 % Bernsteinsäure und 1 % Aluminiumsulfat reduziert sich die Umwandlungsgeschwindigkeit auf ca. 20-30 Minuten (vgl. **Fig. 13**). Die gebildeten Kristalle sind vergleichbar zu den mit 0,1 % Bernsteinsäure erzeugten Prismen, weisen jedoch L/D-Verhältnisse von 3:1 bis 10:1, typisch von 6:1 auf. Der Blaine-Wert erhöht sich auf ca. 1400 cm²/g, die Filtration ist etwas langsamer, jedoch etwa viermal so schnell wie die des kommerziell verfügbaren α-Calciumsulfat-Halbhydrats. Das Material reagiert jedoch nur geringfügig schneller als das α-Calciumsulfat-Halbhydrat mit alleinigem Zusatz von Bernsteinsäure (nur ca. 60 % Umsetzung nach 180 Minuten; vgl. **Fig. 14**).

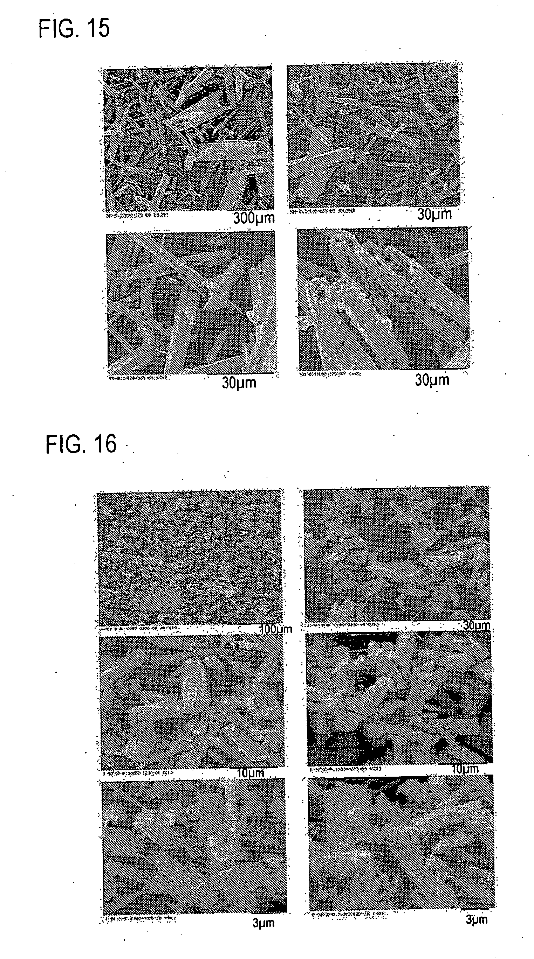

Die Zugabe von 0,1 % eines Abbindeverzögerers (Handelsname Aminoplus) auf Proteinbasis bewirkt eine erhebliche Verlangsamung der Umwandlung zu α-Calciumsulfat-Halbhydrat. Die Umwandlung ist erst nach ca. 90 Minuten abgeschlossen, gebildet haben sich dann Prismen und Stäbchen mit einer Länge von ca. 80 µm und mit einem L/D-Verhältnis im Bereich von 3:1 bis 10:1, typisch von 8:1 (vgl. **Fig. 15**). Das Reaktionsmaximum ist nach 120 Minuten erreicht, wobei nach drei Stunden eine ca. 90 %ige Rehydratation erfolgt ist. Eine Reduzierung des Abbindeverzögerers auf 0,03 % hat kaum Auswirkungen auf die Umwandlungsgeschwindigkeit und die Kristallisation im Vergleich zum REA-Gips ohne Zusätze (Nadeln, Blaine-Wert ca. 10000 cm²/g). Damit ist die Dosiermenge des Abbindeverzögerers von erheblichem Einfluss.

Es zeigt sich, dass durch die Zusätze im Gegensatz zum Schleifstaub die Kristallisation und die Umwandlungsgeschwindigkeit des REA-Calciumsulfat-Dihydrats zum α-Calciumsulfat-Halbhydrat gezielt zu beeinflussen ist.

In weiteren Versuchen soll mit gezielt kristallisierten α-Calciumsulfat-Halbhydrat Suspensionen der Einfluss des Kristallhabitus und der Kristallgrößen auf die Produzierbarkeit und die Eigenschaften der Gipsfasermischungen untersucht werden. Weiterhin soll der derzeit verfügbare REA-Gips auf Kristallisation mit und ohne Bernsteinsäurezusatz geprüft werden.

### 1.4 Viertes Arbeitspaket (vgl. Fig. 16, 17, 31 bis 35)

In einem weiterhin der ersten Untersuchungsreihe zuzuordnenden vierten Arbeitspaket wurden Abmischungen aus 50 % REA-Gips und 50 % Schleifstaub mit und ohne Zusatz von 0,1 % Bernsteinsäure bei 125°C im Reaktor behandelt. Dem vierten Arbeitspaket sind die in den Fig. 16 bis 17 sowie in den Fig. 31 bis 35 gezeigten Ergebnisse zugehörig. Weiterhin wurde bei beiden Varianten der Einfluss einer zweistündigen Vorlagerung der Abmischung in Wasser vor der thermischen Behandlung untersucht (Umwandlung des α-Calciumsulfat-Halbhydrats im Staub zu Dihydrat, um die Keimbildungshäufigkeit zu unterdrücken und mehr Kristallwachstum zu erreichen, siehe erstes Arbeitspaket).

Die Messungen mit 50 % REA-Gips und 50 % Schleifstaub ohne Zusätze ergaben ohne zweistündige Vorlagerung, dass die Umwandlung zwischen 0 bis 10 Minuten nach Erreichen der Zieltemperatur abgeschlossen ist. Die gebildeten Kristalle sind alle nadelförmig und weisen Längen von 3-30 µm, typisch von 10 µm auf. Es sind L/D-Verhältnisse von 10:1 bis 0:1, typisch von 15:1 realisierbar. Der Blaine-Wert beträgt ca. 20000 cm²/g, die Reaktivität ist ähnlich wie bei der reinen REA-Gips Probe ohne Zusätze.

Die Filtrationsgeschwindigkeit ist deutlich langsamer als bei dem reinen REA-Gips, die Kristalle binden deutlich mehr Restwasser. Hier machen sich die deutlich kleineren Nadeln (um Faktor 5 reduzierte Nadellänge) negativ bemerkbar.

Wird die Abmischung aus REA-Gips und Staub zwei Stunden vor Temperaturbehandlung in Wasser gelagert, so ändert sich an den Eigenschaften nur wenig, die Filtration ist etwas verbessert, der Blaine-Wert bleibt nahezu unverändert.

Mit 0,1 % Bernsteinsäure bilden sich hauptsächlich pseudohexagonale Prismen mit einer Länge von im Mittel 12 µm (6-17 µm) und L/D-Verhältnissen von 3:1 bis 5:1, typisch 4:1, auf denen sehr kleine rundliche Körner mit 0,2 bis 0,4 µm Durchmesser haften.

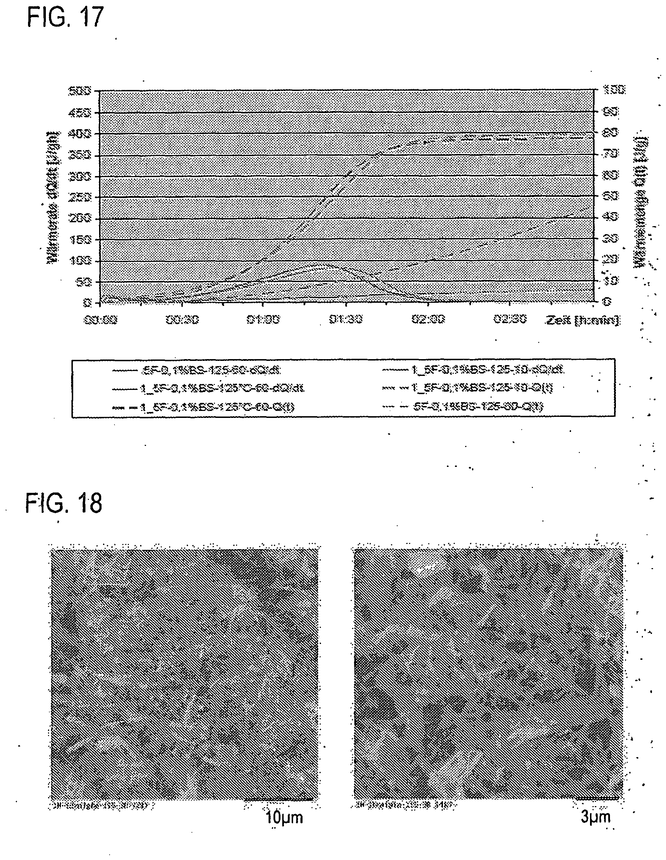

Außerdem liegen feine Nadeln mit einer Länge von 0,3 bis 6 µm vor. Die spezifische Oberfläche beträgt 7590 cm²/g. Bei der Rehydratation ist das Reaktionsmaximum nach ca. 80 Minuten erreicht, wobei nach 3 Stunden ca. 84 % des α-Calciumsulfat-Halbhydrats zu Calciumsulfat-Dihydrat umgesetzt wurde (vgl. **Fig. 17**). Die Filtration ist etwas langsamer als bei dem kommerziell verfügbaren α-Calciumsulfat-Halbhydrat, aber vermutlich für die Rückführung größerer Mengen brauchbar.

Wird die Abmischung aus REA-Gips und Staub mit Bernsteinsäurezusatz zwei Stunden vor Temperaturbehandlung in Wasser gelagert, so ist die Umwandlung zu α-Calciumsulfat-Halbhydrat 0 bis 10 Minuten nach Erreichen der Haltezeit abgeschlossen. Mit dem erzeugten α-Calciumsulfat-Halbhydrat stellt sich eine deutlich beschleunigte Filtration ein (schneller als das kommerziell verfügbare α-Calciumsulfat-Halbhydrat), der Blaine-Wert reduziert sich auf 6040 cm²/g.

Die Abmessungen der prismatischen Kristalle sind vergleichbar zu der Probe ohne zweistündige Vorlagerung der Suspension, aber die Reduzierung des Anteils der rundlichen Körner und der nadeligen Kristalle ist signifikant (vgl. **Fig. 16**).

Das Reaktionsmaximum der rehydratisierten Probe ist erst nach ca. 100 Minuten erreicht, allerdings ist die Reaktion nach drei Stunden abgeschlossen (83 J/g). Die Reaktivität entspricht damit näherungsweise der des kommerziell verfügbaren α-Calciumsulfat-Halbhydrats (ca. 90 Minuten Reaktionsmaximum, mit 82 J/g nach 180 Minuten).

Damit ist die Abmischung aus 50 % REA und 50 % Schleifstaub mit Bernsteinsäurezusatz für das nasse Verfahren die bislang positivste Variante. Die Viskosität der Suspension ist im Vergleich zu den Suspensionen mit nadelförmigen Kristallen, die sich ohne Bernsteinzusatz gebildet haben, sehr niedrig. Bei gleichem Wasser-Feststoff-Wert stellt sich mit Bernsteinsäurezusatz ein um den Faktor 6 bis 7 höheres Fließmaß ein (Messung mit Schmidt-Ring).

Durch den geringen Wasseranspruch der gebildeten Kristalle kann die Suspension mit sehr geringen Wasser-Feststoff Werten verarbeitet werden, was die Herstellung preiswerter macht (weniger Energie für das Aufheizen von überschüssigem Wasser).

Im Rahmen des vierten Arbeitspakets wurde die Einarbeitung der erzeugten α-Calciumsulfat-Halbhydrat Suspensionen in die Nassmischung und Verpressung zu Gipsfaserplatten im Taktpressverfahren untersucht (vgl. hierzu Tabelle gemäß **Fig. 31**). Für diese Versuche wurden die Suspensionen aus 50 % REA-Gips und 50 % Schleifstaub mit 0,1 % Bernsteinsäurezusatz verwendet. Dabei wurde vergleichend der Effekt einer zweistündigen Vorlagerung der Suspension in Wasser zur nicht vorgelagerten Suspension geprüft. Dafür wurde die Suspension 30 und 60 Minuten bei 125°C behandelt, anschließend aus dem Reaktor abgelassen und heiß mit einer Papierfaserpulpe, einem Stuckgips der Bezeichnung LGHHS und einem Abbindeverzögerer in einem Technikums-Nassmischer für 180 s vermischt. Die Mischung wurde in die Einzeltaktpresse eingefüllt und zu Gipsfaserplatten verpresst. Dabei wurde die Entwässerungszeit ermittelt.

Nach dem Abbinden wurde die so hergestellte Platte getrocknet, anschließend geschliffen und nach mindestens zweitägiger Klimatisierung auf Punktbelastbarkeit nach EN 12825 auf starren Auflagern geprüft. Die Ergebnisse sind in der in **Fig. 31** gezeigten Tabelle zusammengestellt.

Der Zusatz der α-Calciumsulfat-Halbhydrat Suspension aus 50 % REA und 50 % Staub bewirkt bereits bei 20 %igem Anteil eine erhebliche Beschleunigung der Entwässerungszeiten (11,4 s im Vergleich zu 15 s bei vergleichbarer Dicke mit normaler Mischung). Die zweistündige Vorlagerung der Suspension vor der thermischen Behandlung beschleunigt die Entwässerung zusätzlich (9,6 s). Bei 40 %igem Anteil wird die Entwässerung weiter beschleunigt (ca. 8,5 bis 9 s).

Das auszutrocknende Wasser ist sowohl mit 20 % als auch mit 40 % Zusatz mit ca. 14,4 bis 15,2 M.% atro. deutlich unter dem Wert, der in der Produktion bei vergleichbaren Produkten mit normaler Nassmischung mit 100 % Stuckgips ohne Zusatz der α-Calciumsulfat-Halbhydrat Suspension vorliegt (ca. 18 M. % atro).

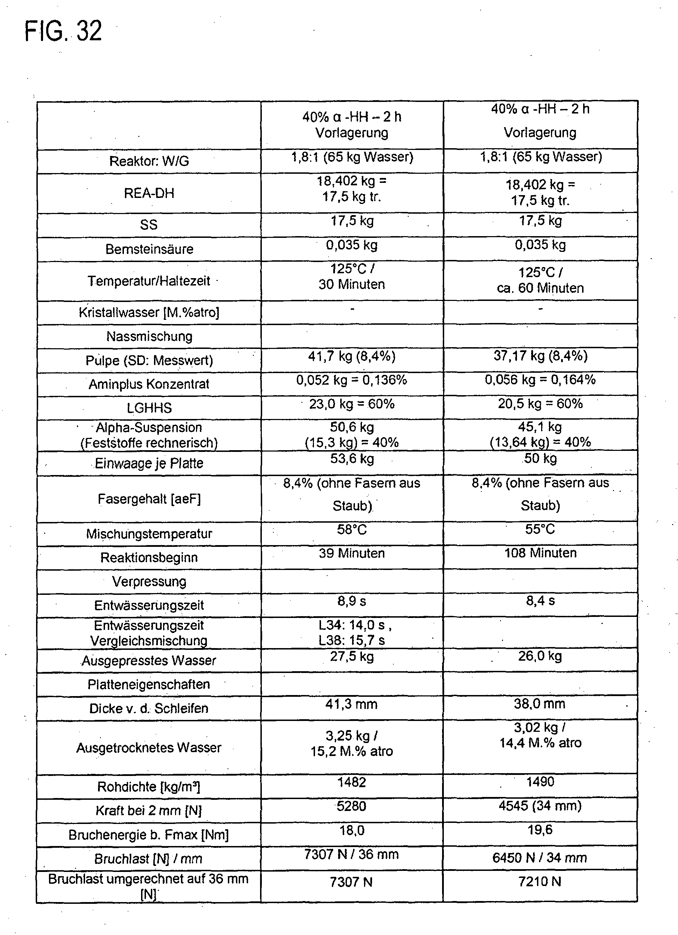

Wie sich aus der in **Fig. 32** gezeigten Tabelle ergibt, liegen die Bruchlasten mit ca. 7,3 kN (Mittel 36L 2010: 7,1 kN) im normalen Bereich. Die Durchbiegungen und Dichten sind mit ca. 1480 bis 1500 kg/m³ (Mittel 36L 2010: 1482 kg/m³) im normalen Bereich für den verwendeten Faserstoff. Bei außergewöhnlich schneller Entwässerung - wie hier bei Zusatz der α-Calciumsulfat-Halbhydrat Suspension - stellen sich erfahrungsgemäß schlechte Bruchlasten ein (Versuche mit grobem Stuckgips und grobem α-Calciumsulfat-Halbhydrat). Daher sind die ermittelten Bruchlasten, wenn auch nur durchschnittlich, als sehr positiv anzusehen.

Bei Verwendung von 100 % α-Calciumsulfat-Halbhydrat Suspension als Bindemittel wurde versehentlich ein deutlich zu hoher Fasergehalt (FGH) eingestellt (13,6 % statt 8,6%). Dadurch musste eine etwa doppelt so hohe Wassermenge wie üblich (54 statt 27 kg) bei geringerer Plattendicke ausgepresst werden. Dafür stellt sich eine vergleichsweise geringe Entwässerungszeit ein (14,6 s ohne Vorlagerung, 12,6 s mit zweistündiger Vorlagerung).

Die Dichten sind durch den sehr hohen FGH mit ca. 1300 kg/m³ sehr gering. Überraschend positiv sind daher die hohen Bruchlasten (umgerechnet auf 36 mm Dicke ca. 9 kN). Es wurden dabei um mindestens 50 % geringere Bruchlasten erwartet.

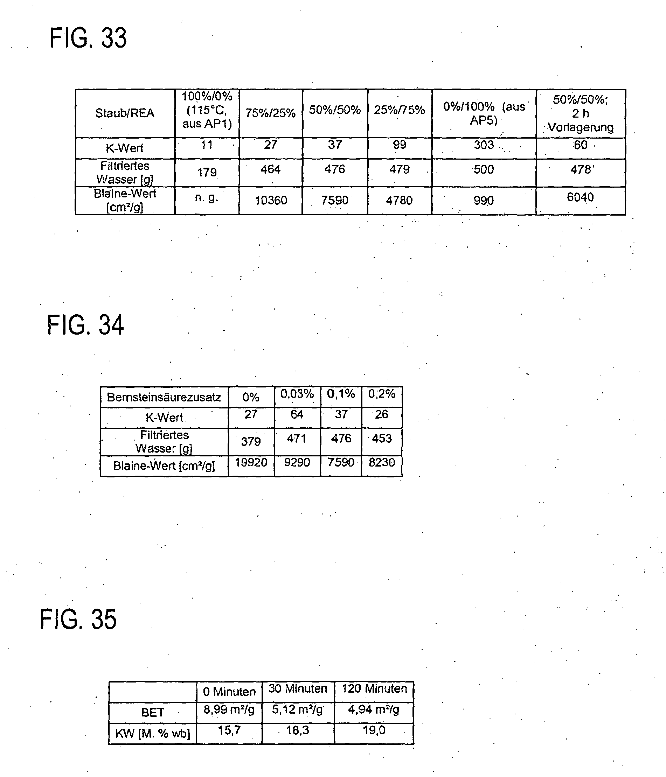

Es wurden im Rahmen des vierten Arbeitspaketes zudem Versuche zum Einfluss des REA-/Staubverhältnisses und des Anteiles der zugesetzten Bernsteinsäure gemacht (vgl. hierzu die Tabelle gemäß **Fig. 33**). Dabei wurden auf Basis der positiven Ergebnisse mit den Abmischungen aus 50 % REA und 50 % Staub weitere Versuche mit Variation der Staubmenge und mit Variation der Bernsteinsäuremenge durchgeführt.

Auf Basis der Prüfergebnisse sollte eine Einarbeitbarkeit der Suspension in die Produktionsmischung ohne Produktivitätseinbuße auch mit 75 % Staubanteil realisierbar sein. Trotz einer vergleichbaren Filtrationsgeschwindigkeit wie bei der Probe mit 50 % Staub und 50 % ohne Bernsteinsäurezusatz (vgl. die in **Fig. 33** gezeigte Tabelle), stellt sich immer noch ein geringer Wasseranspruch ein und ein deutlich erhöhte Menge des Gesamtfiltrates. Am Unterschied der Proben mit 100 % Staub und 75 % Staub ist auch erkennbar, dass sich bereits relativ geringe Zusätze des REA-Gipses positiv auf die Eigenschaften auswirken. Mit 100 % Staubanteil ist die Mischung nicht mehr filtrierbar und hat einen extrem hohen Wasseranspruch.

Wie sich aus den Ergebnissen der in **Fig. 34** gezeigten Tabelle ergibt, stellte sich überraschend heraus, dass die Bernsteinsäure mit 0,2 % bezüglich der Filtration anscheinend überdosiert ist. Die Filtrationseigenschaften mit 0,03 % Zusatz sind deutlich verbessert, obwohl die spezifische Oberfläche vergrößert wird.

Bei ebenfalls im Rahmen des vierten Arbeitspakets durchgeführten Untersuchungen zum Einfluss der Vorlagerung der Staubsuspension in Wasser wurden folgende Erkenntnisse erlangt (vgl. die in **Fig. 35** gezeigte Tabelle). Eine Vorlagerung des Staubes und der Staub-REA Mischungen wirkt sich positiv auf das Filtrationsverhalten und die Kristallisation aus (siehe vorherige Ergebnisse). Daher wurde untersucht, wie sich die BET-Oberfläche und der Kristallwasseranteil des Staubes nach unterschiedlicher Lagerungszeit im Wasser bei Raumtemperatur ändern.

Zwischen 0 und 30 Minuten reduziert sich die BET Oberfläche erheblich, danach nur sehr gering. Die Änderung des Kristallwassers ist ebenfalls zwischen 0 und 30 Minuten signifikant, danach treten noch geringe Änderungen auf. Die Umwandlung des Calciumsulfat-Halbhydrats im Staub ist wohl nach ca. 30 Minuten Wasserlagerung zum großen Teil abgeschlossen. Eine zweistündige Vorlagerung ist damit wohl nicht erforderlich.

### 1.5 Fünftes Arbeitspaket (vgl. Fig. 18)

In einem fünften Arbeitspaket wurden im Rahmen der ersten Untersuchungsreihe der Zusatz von Kristallisationskeimen zum Schleifstaub untersucht. Dem fünften Arbeitspaket sind die in Fig. 18 bis Ergebnisse zugehörig. Bei diesen Versuchen wurde der Schleifstaub in der Suspension auf ca. 90-100°C erhitzt, bevor 10 % α-Calciumsulfat-Halbhydrat bezogen auf den eingesetzten Staub zugegeben wurden. Danach wurde einmal auf 105°C (Ziel: Reduzierung der Keimbildungshäufigkeit) und einmal auf 115°C erhitzt. Der Versuch wurde ebenfalls mit und ohne zweistündige Vorlagerung des Staubes in Wasser vor Aufheizung durchgeführt.

Ohne zweistündige Vorlagerung ergibt sich bei 115°C ein α-Calciumsulfat-Halbhydrat, welches mit einem Blaine-Wert von ca. 19000 cm²/g und einer sehr schlechten Filtrierbarkeit, die nur unwesentlich besser ist als die des Staubes ohne Keimzusatz, mit fast ausschließlich feinen, nadeligen Kristallen (vgl. **Fig. 18**). Hiermit ergibt sich kein Vorteil gegenüber der reinen Staubsuspension ohne Keimzusatz.

Mit zweistündiger Vorlagerung ergibt sich ein etwas verändertes Produkt. Der Blaine-Wert sinkt auf etwa 11400 cm²/g, es bilden sich viele Nadeln mit einer Länge L von ca. 6-15 µm, typisch 10 µm, und einem L/D-Verhältnis von ca. 15:1 (10:1 bis 30:1). Mit geringerer Häufigkeit liegen stäbchenförmige Kristalle mit einer Länge L von 20-35 µm, typisch 27 µm, und einem L/D-Verhältnis von ca. 6:1 (4:1 bis 10:1) und wenig grobkörnige Kristalle mit einer Länge L von 20-80 µm, typisch 40 µm, und einem L/D-Verhältnis von ca. 2:1 (1:1 bis 4:1) vor, wobei es sich wohl vor allem um kaum veränderte Kristalle des zugesetzten α-Calciumsulfat-Halbhydrats handelt.

Das Produkt weist trotz des hohen Blaine-Wertes und des hohen Anteiles feiner Nadeln eine Filtrationsgeschwindigkeit auf, die der des kommerziell verfügbaren α-Calciumsulfat-Halbhydrats nahe kommt. Jedoch bindet der Filterkuchen deutlich mehr Wasser.

Die Reaktivität des rehydratisierten Produktes sinkt mit zunehmender Haltezeit bei 115°C. Bei 0-minütiger Behandlungszeit bei 115°C liegt das Reaktionsmaximum der Probe bei 40 Minuten, bei 30-minütiger Behandlungszeit bei 85 Minuten und bei 60-minütiger Zeit bei 95 Minuten.

Bei 105°C ergibt sich weder ohne noch mit zweistündiger Vorlagerung eine Umwandlung des Staubes mit α-Calciumsulfat-Halbhydrat Keimzusatz zu α-Calciumsulfat-Halbhydrat. Hier ist wohl trotz Keimzusatz ähnlich wie bei den Versuchen mit reinem Schleifstaub eine Grenze erreicht, bei der die Umwandlung nicht oder nur sehr langsam erfolgt.

Die erste Untersuchungsreihe lässt sich wie folgt zusammenfassen. Am positivsten sind die Erkenntnisse aus dem vierten Arbeitspaket. Hier liegt ein hohes Zukunftspotential vor. Die Arbeitspakte im Einzelnen:

Zum ersten Arbeitspaket lässt sich festhalten, dass das aus dem reinen Schleifstaub mit dem Reaktor erzeugte α-Calciumsulfat-Halbhydrat-Produkt für eine wirtschaftliche Rückführung in die Produktion nur bedingt geeignet ist.

Die Ergebnisse des zweiten Arbeitspakets zeigen in anwendungstechnischer Hinsicht im Vergleich zu den übrigen Arbeitspaketen geringere Erfolgsaussichten.

Zum dritten Arbeitspaket lässt sich festhalten, dass durch die Additive im Gegensatz zum Schleifstaub die Kristallisation und die Umwandlungsgeschwindigkeit des REA-Dihydrats zum α-Calciumsulfat-Halbhydrat gezielt zu beeinflussen ist.

Das Ergebnis des vierten Arbeitspakets ist positiv. Mit 100 % Suspension als Bindemittel und dem versehentlich eingestellten hohen Fasergehalt ergab sich bei einer sehr geringen Dichte eine ungewöhnlich hohe Bruchlast. Hier könnte sich möglicherweise ein bezüglich Festigkeits-Dichte-Relation interessantes Produkt ergeben.

Betreffend das fünfte Arbeitspaket ergaben sich wichtige Kenntnisse bezüglich der Wirkung des Zusatzes von Kristallisationskeimen zu den Schleifstäuben.

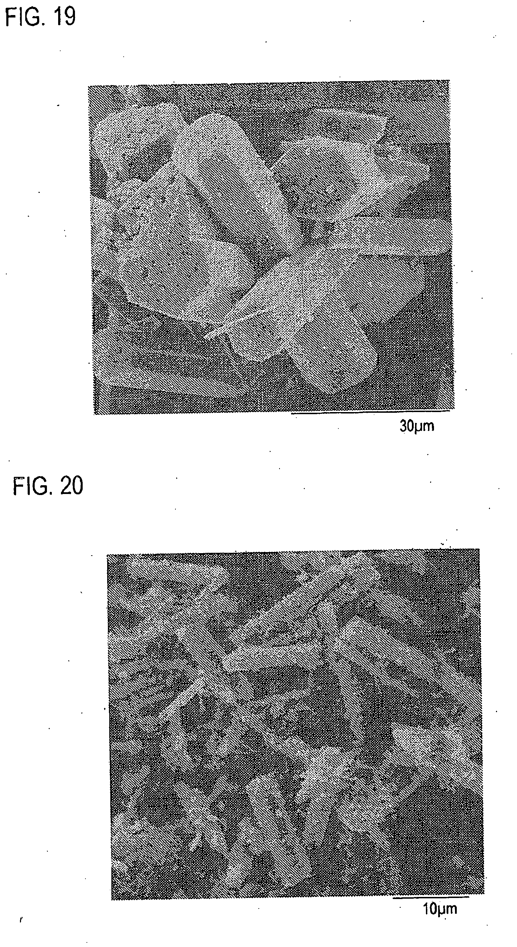

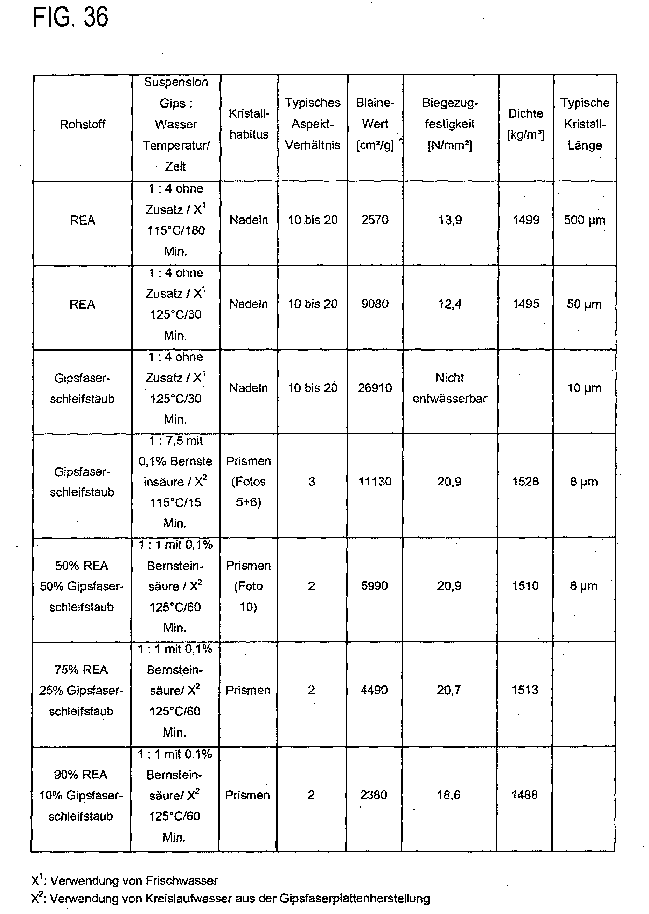

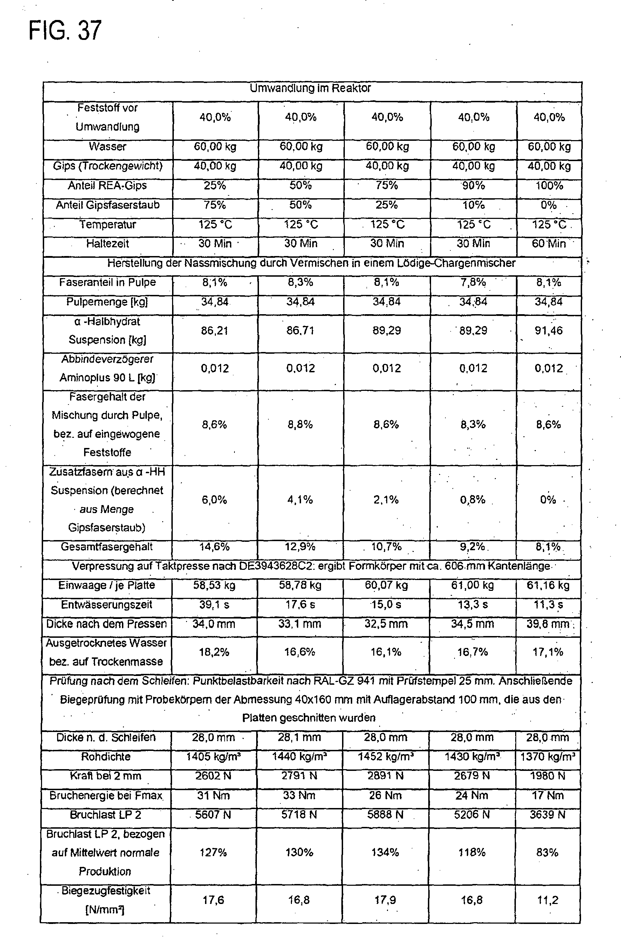

Nachfolgende Ausführungen betreffen eine zweite Untersuchungsreihe zum erfindungsgemäßen Verfahren. Der zweiten Untersuchungsreihe sind die in den Fig. 19 bis 30 sowie in den Fig. 36 und 37 gezeigten Ergebnisse zugehörig.

### 2. Untersuchungsreihe

Auch die Untersuchungen der zweiten Untersuchungsreihe befassen sich mit der energiesparenden Herstellung von α-Calciumsulfat-Halbhydrat mit dem Nassverfahren aus Stäuben, die bei der Herstellung und Verarbeitung von Gipsfaserplatten als Abfall anfallen, wobei ein Verschnitt dieser Stäube mit REA-Gips vorteilhafte Eigenschaften bringt. Weiterhin wird die Verwendung des aus diesen Rohstoffen erzeugten α-Calciumsulfat-Halbhydrats für die Herstellung von Gipsfaserplatten behandelt.

Gipsfaserplatten sind nach EN 15283-2 ebene, rechteckige Platten, die aus einem abgebundenen Gipskern bestehen, der mit im Kern verteilten anorganischen und/oder organischen Fasern verstärkt ist. Es dürfen auch Zusatzmittel und Füllstoffe vorhanden sein. Eine große Verbreitung haben nur die Gipsfaserplatten gefunden, die mit organischen Fasern aus Altpapier, Primärzellulose, Holzfasern oder mit Holzspänen verstärkt sind.

Gipsfaserplatten werden nach unterschiedlichen Verfahren hergestellt. Bei den trockenen oder halbtrockenen Verfahren werden trocken zerfasertes Papier oder Holzspäne mit dem Gipsbindemittel sowie gegebenenfalls Zusätzen gemischt auf ein Streuband gestreut. Dabei kann die Gipsfasermischung vor dem Streuen befeuchtet werden, so dass ausreichend Wasser zum Abbinden des Bindemittels zur Verfügung steht und Überschusswasser nicht filtriert werden muss. Anschließend erfolgt die Verdichtung, wobei der Gips unter dem Pressendruck abbindet. Bei einer anderen Variante, einer Mischung aus trockenem und nassen Verfahren, wird die gestreute trockene Mischung von einem Streuband auf ein wasserdurchlässiges Siebgewebe übergeben, vorverdichtet und anschließend mit Wasser befeuchtet, wobei das Wasser mit Vakuum filtriert wird. Anschließend bindet der Gips ab.

Bei den nassen Verfahren wird ein Papierfaserbrei aus Papier und Wasser hergestellt, der mit dem Gipsbindemittel und möglichen weiteren Zusätzen gemischt wird. Diese Nassmischung hat einen großen Wasserüberschuss und wird bei der Formgebung mittels Vakuum und/oder Druck entwässert, anschließend bindet der Gips ab.

Gemeinsam ist bei allen Verfahren, dass die geformten Platten nach dem Abbinden getrocknet und endbearbeitet werden. Die Endbearbeitung beinhaltet üblicherweise einen Schleifprozess zur Dickenkalibrierung der Platte (je nach Dickentoleranz nicht immer und bei allen Verfahren erforderlich) und den Zuschnitt der Platten auf die gewünschten Abmessungen. Je nach Anwendung werden die Platten auch noch gefräst. Bei diesen Bearbeitungsschritten fällt sehr feinkörniger Gipsfaserstaub an. Durch Mahlen von Ausschussplatten oder Platten, die aus dem Abbruch oder der Renovierung von Gebäuden stammen, fällt ebenfalls feinkörniger Gipsfaserabfall an.

Wie eingangs erwähnt, wird als Rohstoff für abbindefähigen Gips entweder Naturgips oder technischer Gips, bei dem der Gips in technischen Prozessen als Nebenprodukt anfällt, verwendet. Von den technischen Gipsen hat der Rauchgas-Entschwefelungs-Anlagen-Gips, kurz REA-Gips die größte Bedeutung. Aus technisch wirtschaftlichen Gründen sind der Phosphorgips aus der Phosphorsäureherstellung und der Zitronensäuregips von geringerer Bedeutung.

Der Rohgips, der zum großen Teil aus Calciumsulfat-Dihydrat besteht, wird durch thermische Behandlung zu abbindefähigem Gips in Form von Calciumsulfat-Halbhydrat entwässert. Wie erwähnt, sind zwei verschiedene Formen von Calciumsulfat-Halbhydrat bekannt, die man als α-Calciumsulfat-Halbhydrat und als β-Calciumsulfat-Halbhydrat bezeichnet, obwohl diese Modifikationen chemisch-mineralogisch identisch sind. Sie entstehen bei unterschiedlichen thermischen Behandlungen und unterscheiden sich in ihren physikalischen Eigenschaften. Das β-Halbhydrat entsteht bei der Kalzinierung unter atmosphärischen Druck.

Unter dem Mikroskop zeigt β-Calciumsulfat-Halbhydrat zerklüftete Teilchen der ehemaligen Dihydrat-Körner und weist eine hohe Eigenporosität auf. Aufgrund der hohen Oberfläche liegt ein hoher Wasseranspruch vor. Dahingegen lässt α-Calciumsulfat-Halbhydrat im Mikroskop gut ausgebildete Kristalle erkennen und weist einen deutlich geringeren Wasseranspruch auf.

Das α-Calciumsulfat-Halbhydrat wird entweder mit dem Nassverfahren, auch Suspensionsverfahren genannt, oder mit dem Trockenverfahren, auch Sattdampfverfahren genannt, hergestellt. Diese Untersuchungsreihe beschäftigt sich mit der Herstellung von α-Calciumsulfat-Halbhydrat mittels des Nassverfahrens.

Beim Nassverfahren gibt es Varianten mit Zusatz nur geringer Mengen Additive, oder aber mit Zusatz von großen Mengen Salzen oder Säuren. Die Umwandlung in Suspensionen aus Calciumsulfat-Dihydrat unter Zusatz von Säuren, besonders Schwefelsäure, ist z. B. aus DE 1 274 488 bekannt. Die Umwandlung zu α-Calciumsulfat-Halbhydrat in Salzlösungen ist ebenfalls bekannt und ermöglicht die Behandlung unterhalb des Siedepunktes des Wassers, so dass keine Druckbehälter erforderlich sind und weniger Energie verbraucht wird (vgl. US 2,616,789, DE 3 709 393). Diese Verfahren konnten sich nicht durchsetzen.

Beim herkömmlichen Nassverfahren wird α-Calciumsulfat-Halbhydrat aus einer wässrigen Calciumsulfat-Dihydrat Suspension bei Temperaturen oberhalb 100°C, typisch ca. 120 bis 140°C, im Autoklaven erzeugt. Die Umwandlung kann kontinuierlich oder diskontinuierlich erfolgen. Als Rohstoffe für dieses Verfahren werden meist feinteilige REA-Gipse, aber auch gemahlene Naturgipse verwendet.

Die Zugabe von Additiven, welche die Kristallmorphologie und hierbei besonders das Verhältnis der Länge zur Breite der Kristalle (L/D-Verhältnis), welches auch als Aspekt-Verhältnis bezeichnet wird, reduzieren, ergibt α-Calciumsulfat-Halbhydrat mit hochwertigeren Eigenschaften. Dazu werden bevorzugt Dicarbonsäuren oder deren wasserlösliche Salze verwendet, z. B. Apfelsäure, Bernsteinsäure, Zitronensäure, Maleinsäure. Neben den aliphatischen Dicarbonsäuren werden auch aromatische Dicarbonsäuren wie die Phthalsäure, aber auch Carboxymethylcellulose verwendet. Weiterhin ist der Zusatz von Salzen möglich, welche das Kristallwachstum beeinflussen können und die Entwässerungstemperatur reduzieren, z. B. Kaliumsulfat, Aluminiumsulfat, Zinksulfat, Calciumchlorid, Kaliumchlorid etc. Die Kombination dieser Salze mit den Dicarbonsäuren ist ebenfalls möglich.

Die gezielte Erzeugung von Kristallkeimen ist für den nassen Prozess sehr wichtig. Dies geschieht durch Ansäuerung der Suspension auf pH-Werte unterhalb 3, durch kurzfristige Anhebung der Temperatur (beides erhöht die Übersättigung), oder durch kurzzeitige Verminderung von Kristalltracht beeinflussenden Substanzen, oder durch die direkte Zugabe von Keimkristallen. Es kann angestrebt sein, nicht zu große Kristalle mit < 300 bis 400 µm, aber mit einer Mindestgröße von 20 µm zu erzeugen.

Für die Herstellung von Gipsfaserplatten nach dem nassen Verfahren bietet die Verwendung von α-Calciumsulfat-Halbhydrat große Vorteile. Die Gipsfasermischungen sind schneller und auf einen geringeren Wassergehalt entwässerbar, die Festigkeiten sind hoch. Die Verwendung von α-Calciumsulfat-Halbhydrat mit einer möglichst feinen Mahlung ist besonders vorteilhaft für die Produktion hochfester Gipsfaserplatten, die unter anderem für Doppel- und Hohlraumböden Verwendung finden. α-Calciumsulfat-Halbhydrat ist mit der gewünschten feinen Mahlqualität aufgrund des hohen Aufwandes an Zeit und Energie im Allgemeinen nicht verfügbar. Durch Mischung von α-Calciumsulfat-Halbhydrat möglichst hoher Mahlfeinheit mit Stuckgips sind hohe Festigkeiten bei hochdichten Gipsfaserplatten zu erzielen.

Die Verwendung von gipshaltigen Stäuben, d. h. Stäuben mit Anteilen an Calciumsulfat-Dihydrat, die als Abfallstoff bei der Herstellung und Bearbeitung von Gipsfaserprodukten oder von Gipsprodukten anfallen, zur Herstellung von α-Calciumsulfat-Halbhydrat ist bislang nicht bekannt. Bei den üblicherweise für das Suspensionsverfahren verwendeten Rohstoffen, nämlich feinteiligem REA-Gips und gemahlenem Naturgips, liegt ein deutlich geringerer Feinkornanteil vor als bei den erfindungsgemäß verwendeten Gipsfaserstäuben.

Die REA-Gipse weisen nach lasergranulometrischer Korngrößenanalyse typischerweise eine mittlere Korngröße zwischen 30 bis 70 µm, sehr häufig zwischen 40 bis 50 µm auf. Das Korngrößenband ist typischerweise sehr eng. Dadurch liegt auch nur ein sehr geringer Feinanteil < 5 µm vor, üblicherweise weniger als 5 % des gesamten Kornvolumens. Der Naturgips wird für das Suspensionsverfahren üblicherweise so gemahlen, dass ein möglichst geringer Feinanteil anfällt. Der Feinanteil kann gegebenenfalls abgetrennt werden.

Bei der Produktion von Gipsfaserplatten entstehen durch die Bearbeitung sehr feinkörnige Gipsfaserschleif- und Frässtäube. Diese Stäube bestehen hauptsächlich aus Calciumsulfat-Dihydrat (abgebundener Gips, mit 50 bis 90 Gew.%, typisch 70 bis 85 Gew.%), Calciumsulfat-Halbhydrat (mit 2 bis 50 Gew.%, typisch 5 bis 20 Gew.%) und staubförmigen Lignozellulosefasern (mit 4 bis 25 Gew.%, typisch 6 bis15 Gew.%). Die angegebenen Schwankungsbreiten sind abhängig vom Produkt, Herstellungsabschnitt und Herstellungsprozess.

Gipsfaserstäube, die beim Schleifen oder Fräsen anfallen, haben einen sehr hohen Feinanteil, typischerweise weisen 20 bis 35 % der Partikel Korngrößen unterhalb 5 µm auf. Gipsfaserstäube verfügen über eine hohe spezifische Oberfläche (zwischen 6000-18000 cm²/g, typisch ca. 8000 bis 12000 cm²/g nach Blaine) und weisen zusätzlich staubfeine Lignozellulose auf, welche viel Wasser bindet und dadurch die Verwertung als reaktiviertes Bindemittel erschwert.

Zu ß-Calciumsulfat-Halbhydrat umgewandelter Gipsfaserschleifstaub weist im Vergleich zu Stuckgips der aus herkömmlichen Rohstoffen (REA-Gips oder Naturgips) hergestellt wurde, schlechtere technologische Eigenschaften auf. Der zu ß-Calciumsulfat-Halbhydrat umgewandelte Staub kann bei der nassen Herstellung von Gipsfaserplatten nur zu geringen Teilen zugesetzt werden, da ansonsten die Produktivität durch langsameres Filtrieren und durch Bindung von zusätzlichem Wasser negativ beeinflusst wird. Zusätzlich werden die statischen Eigenschaften der Platten verschlechtert.

Die Schwerpunkte der zweiten Untersuchungsreihe betreffen im Wesentlichen folgende Inhalte: es soll aus den schwer verwertbaren Gipsfaserabfallstäuben α-Calciumsulfat-Halbhydrat hergestellt werden. Es soll α-Calciumsulfat-Halbhydrat mit für die Gipsfaserplattenproduktion verbesserten Eigenschaften hergestellt werden, welches in möglichst großen Mengen in den Gipsfaserherstellungs-Prozess einarbeitbar ist und damit herkömmliche Rohstoffe wie REA-Gips oder Natur-Gips substituieren kann. Das α-Calciumsulfat-Halbhydrat soll aus den aus den gipshaltigen Stäuben mit dem Nassverfahren mit geringem Energieaufwand und geringem apparativen Aufwand hergestellt werden, wobei eine schnelle Umwandlung bei möglichst geringen Temperaturen und mit möglichst hohem Feststoffanteil angestrebt wird. Das erfindungsgemäße Verfahren soll einfach durchführbar sein, so dass es sich leicht in herkömmliche Anlagen zur Herstellung von Gipsfaserplatten integrieren lässt.

Im Rahmen der zweiten Untersuchungsreihe wurde für die Herstellung und thermische Behandlung der Calciumsulfat Suspensionen ein doppelwandiger Spitzboden Druck-Rührbehälter (Reaktor) verwendet, der über den Doppelmantel mit Dampf beheizt wird. Der Behälter umfasst ein Volumen von 164 Litern. Die Suspensionen werden mit ca. 100 kg angesetzt. Der Behälter wird mit einem Ankerrührwerk betrieben. Im Konus des Behälters wird die Temperatur gemessen, im oberen, nicht produktberührten Bereich des Reaktionsraumes wird der Druck gemessen. Hierfür sind geeignete Messmittel vorgesehen.

Bei Untersuchungen unter Verwendung der Gipsfaserstäube hat sich überraschenderweise herausgestellt, dass durch Mischungen von Gipsfaserstaub und REA-Gips mit dem Suspensionsverfahren im Vergleich zur Verwendung von reinem REA-Gips, der üblicherweise für die Herstellung von α-Calciumsulfat-Halbhydrat verwendet wird, sich eine Reihe von Vorteilen ergeben. Die Umwandlungsgeschwindigkeit zu α-Calciumsulfat-Halbhydrat steigt erheblich an, wodurch im Behälter kürzere Verweilzeiten erforderlich sind. Nach Erreichen der Umwandlungstemperatur wird eine deutlich kürzere Haltezeit benötigt als bei der Verwendung herkömmlicher Rohstoffe. Die Kristallgröße und spezifische Oberfläche des hergestellten α-Calciumsulfat-Halbhydrats ist abhängig vom Staubanteil, den Additiven und den Herstellparametern gezielt zwischen ca. 1000 und 12000 cm²/g einstellbar, Zerkleinerungsvorgänge wie insbesondere Mahlvorgänge sind nicht erforderlich. Die Rehydratationsgeschwindigkeit ist signifikant schneller als bei einem vergleichbar hergestellten REA-Gips, daher ist zur Aktivierung kein Mahlen des Produktes erforderlich.

Die folgenden sieben Beispiele verdeutlichen im direkten Vergleich mit zwei unterschiedlichen REA-Gips-Qualitäten die genannten Vorteile des mit dem erfindungsgemäßen Verfahren hergestellten α-Calciumsulfat-Halbhydrats.

Für alle Beispiele wurde ein Schleifstaub aus einer Schleifanlage zur Erzeugung von Gipsfaserplatten verwendet. Der Blaine-Wert des Schleifstaubes betrug ca. 10600 cm²/g. Eine Korngrößenanalyse ergab eine typische Korngrößenverteilung von x₅₀ 22,6 µm, x₁₀ 2,8 µm, x₉₀ 150 µm. Circa 23 % der Partikel weisen eine Korngröße von weniger als 5 µm auf (Spanne: 6,5). Die Werte x₅₀, x₁₀, x₉₀ bedeuten 50 Vol. %, 10 Vol. % und 90 Vol. % Durchgang bei der Korngröße. Der Wert x₅₀ entspricht damit der mittleren volumetrischen Korngröße. Die Breite der Korngrößenverteilung wird durch die Spanne angegeben. Die Spanne berechnet sich aus (x₉₀ - x₁₀) / x₅₀. Für die Korngrößenanalyse wurde der Laser-Partikelgrößenanalysator Coulter Counter LS230 der Firma Coulter Electronics verwendet. Die Proben wurden mit 2-Propanol dispergiert.

Als REA-Gipse wurde ein Steinkohle-REA-Gips mit einem Calciumsulfat-Dihydrat-Anteil von 98 Gew.%. verwendet. Die freie Feuchte betrug ca. 8 Gew.%. Eine Korngrößenanalyse ergab eine typische Korngrößenverteilung von x₅₀ 45,4 µm, x₁₀ 16,9 µm, x₉₀ 96,5 µm. Circa 4,4 % der Partikel weisen eine Korngröße von weniger als 4 µm auf (Spanne: 1,8).

Als REA-Gips wurde zudem ein Braunkohle-REA-Gips mit einem Calciumsulfat-Dihydrat-Anteil von 98 Gew.% verwendet. Die freie Feuchte betrug ca. 8 Gew.%. Eine Korngrößenanalyse ergab eine typische Korngrößenverteilung von x₅₀ 42,7 µm, x₁₀ 20,2 µm, x₉₀ 61,3 µm. Circa 5,0 % der Partikel weisen eine Korngröße von weniger als 4 µm auf (Spanne: 1,0).

Die Reaktionsprodukte der Beispiele wurden mit Rasterelektronenmikrokopie (REM) auf die Kristallabmessungen und die Kristallmorphologie untersucht. Dazu wurde ein Hochvakuum-Rasterelektronenmikroskop vom Typ S 2700 LB der Firma Hitachi verwendet. Vor der Untersuchung wurden Proben mit einer dünnen Kohlenstoffschicht (10-30 nm) bedampft. Weiterhin wurden die spezifische Oberfläche nach Blaine und der Kristallwassergehalt bestimmt.

Die Rehydratationsgeschwindigkeit des erzeugten α-Calciumsulfat-Halbhydrats ist die Rückumwandlungsgeschwindigkeit mit Wasser zu Calciumsulfat-Dihydrat. Diese wurde mit dem ZIAC-Differential-Kalorimeter DC-I(3) der Firma Baurationalisierung Halle bei einem Wasser/Feststoff-Verhältnis von 2:1 bestimmt.

### 2.1 Erstes Beispiel

Bei dem ersten Beispiel wurde eine Suspension aus 80 kg Frischwasser und 21,9 kg Steinkohle-REA-Gips (entspricht 20 kg Trockenmasse) mit Zusatz von 20 g Bernsteinsäure in dem Reaktor auf 125°C aufgeheizt. Die Zeit ab Start der Beheizung bis zum Erreichen der 125°C betrug ca. 20 Minuten. Nach Erreichen der Haltezeit wurde in Abständen von 10 Minuten eine Probe entnommen und der Kristallwassergehalt geprüft.

Nach 50 Minuten ist die Umwandlung zu α-Calciumsulfat-Halbhydrat abgeschlossen, es liegt kein Calciumsulfat-Dihydrat vor. Die α-Calciumsulfat-Halbhydrat-Kristalle sind in **Fig. 19** wiedergegeben. Sie weisen die Form von pseudohexagonalen Prismen mit einer Länge L von typisch 60 bis 80 µm (15-150 µm) bei einem Aspekt Verhältnis von 2:1 bis 6:1, typisch von 4:1; auf. Der Blaine-Wert beträgt 990 cm²/g, die BET-Oberfläche 0,4 m²/g. Die erzeugten Kristalle sind reaktionsträge, das Reaktionsmaximum des α-Calciumsulfat-Halbhydrat bei Rehydratation in Wasser liegt bei über 180 Minuten, wobei nach den 180 Minuten mit 45 J/g eine nur ca. 50%ige Umsetzung erfolgt ist.

### 2.2 Zweites Beispiel

Bei dem zweiten Beispiel erfolgt die Untersuchung wie im ersten Beispiel, allerdings wird statt dem Steinkohle-REA-Gips ein Braunkohle-REA-Gips verwendet.

Selbst nach 90 Minuten liegen bei einem Kristallwassergehalt von ca. 11 Gew.% noch erhebliche Anteile an Calciumsulfat-Dihydrat vor, die Umwandlung zu α-Calciumsulfat-Halbhydrat ist erst nach 120 Minuten vollständig abgeschlossen. Damit erfolgt die Umwandlung deutlich langsamer als bei dem im ersten Beispiel verwendeten Steinkohle-REA-Gips. Die α-Calciumsulfat-Halbhydrat-Kristalle weisen die Form von sechseckigen Prismen mit einer Länge von typisch 60 bis 80 µm bei einem L/D-Verhältnis von typisch 5:1 auf.

### 2.3 Drittes Beispiel

Gemäß Beispiel 3 wird eine Suspension aus 83,3 kg Wasser, 8,35 kg Gipsfaserschleifstaub und 8,77 kg des feuchten Steinkohle-REA-Gips aus dem ersten Beispiel (entspricht 8,35 kg Trockenmasse) mit Zusatz von 16,7 g = 0,1 Gew.% Bernsteinsäure auf 125°C aufgeheizt. Die Hälfte des Steinkohle-REA-Gipses aus dem ersten Beispiel wird also durch Gipsfaserschleifstaub ersetzt.

Die Umwandlung ist 0 bis 10 Minuten nach Erreichen der Zieltemperatur abgeschlossen. Damit erfolgt die Umwandlung etwa 40 bis 50 Minuten schneller als im ersten Beispiel. Die gebildeten Kristalle (**Fig. 20**) sind vorzugsweise pseudohexagonale Prismen mit einer Länge L von im Mittel 12 µm (6-17 µm) und einem L/D-Verhältnis im Bereich von 3:1 bis 5:1, typisch von 4:1. Auf den Kristallen haften kleine rundliche Körner mit 0,2 bis 0,4 µm Durchmesser. Außerdem liegen feine Nadeln mit einer Länge L von 0,3 bis 6 µm vor. Die spezifische Oberfläche beträgt 7590 cm²/g.

Bei der Rehydratation ist das Reaktionsmaximum nach ca. 80 Minuten erreicht, wobei nach ca. zwei Stunden die Umwandlung des α-Calciumsulfat-Halbhydrats zu Calciumsulfat-Dihydrat beinahe abgeschlossen ist. Damit liegt eine wesentlich höhere Reaktivität vor, als unter Verwendung des reinen REA-Gipses wie im ersten Beispiel.

### 2.4 Viertes Beispiel

Die Untersuchungen gemäß dem vierten Beispiel erfolgen wie im dritten Beispiel, allerdings wird statt dem Steinkohle-REA-Gips der Braunkohle-REA-Gips aus dem zweiten Beispiel verwendet.

Die Umwandlung ist 0 bis 10 Minuten nach Erreichen der Zieltemperatur abgeschlossen. Die gebildeten Kristalle sind vergleichbar zu denen des dritten Beispiels. Die spezifische Oberfläche beträgt 7270 cm²/g. Es wird sonach weniger als ein Zehntel der Haltezeit benötigt, die mit dem reinen Braunkohle-REA-Gips im zweiten Beispiel erforderlich war.

Der Zusatz von Gipsfaserstaub bringt damit einheitlich schnelle Umwandlungszeiten, egal ob der REA-Gips sich wie im ersten Beispiel vergleichsweise schnell oder wie im dritten Beispiel vergleichsweise langsam umwandelt.

### 2.5 Fünftes Beispiel

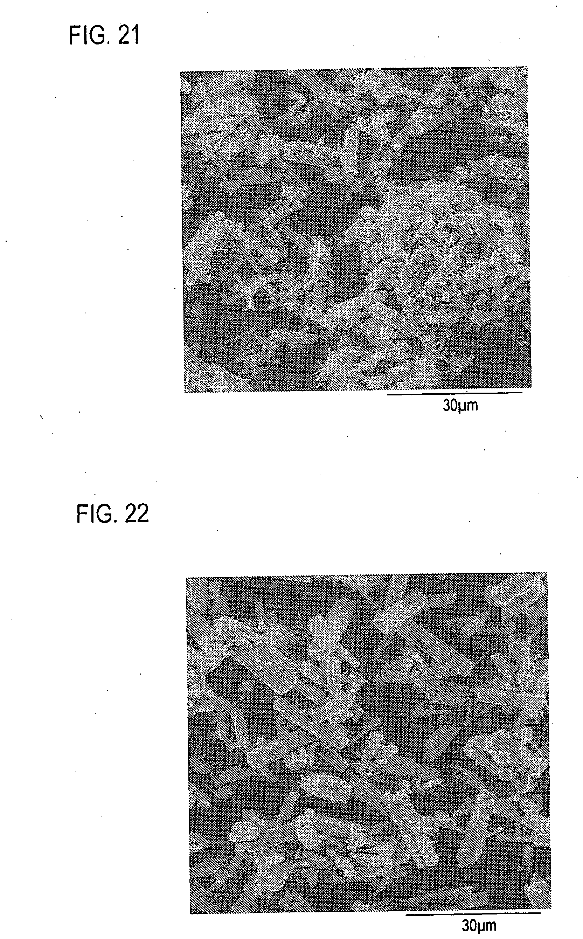

Im fünften Beispiel wird eine Suspension analog zum dritten Beispiel umgewandelt, der Staubanteil beträgt jedoch 25 %, der REA-Gips-Anteil 75 %. Die Umwandlung ist nach 20 Minuten abgeschlossen, das Umwandlungsprodukt weist eine spezifische Oberfläche nach Blaine von ca. 4780 cm²/g auf. Die prismatischen Kristalle sind in **Fig. 22** abgebildet und weisen eine Länge L von im Mittel ca. 15 µm bei einem typischen L/D-Verhältnis von 4 bis 5 auf. Der Feinanteil ist deutlich geringer als im dritten Beispiel.

### 2.6 Sechstes Beispiel

Im sechsten Beispiel wird eine Suspension analog zum dritten Beispiel umgewandelt, der Staubanteil beträgt jedoch 10 %, der REA-Gips-Anteil 90 %. Die Umwandlung ist nach 30 Minuten abgeschlossen, die spezifische Oberfläche nach Blaine beträgt ca. 2630 cm²/g. Die prismatischen Kristalle sind im Mittel ca. 14 µm lang und haben ein typisches L/D-Verhältnis von 3 bis 4. Das Reaktionsmaximum der rehydratisierten Probe ist nach ca. 130 Minuten erreicht, wobei die Umwandlung des α-Calciumsulfat-Halbhydrats zu Calciumsulfat-Dihydrat nach ca. 180 Minuten abgeschlossen ist. Damit liegt eine wesentlich höhere Reaktivität vor als unter Verwendung des reinen REA-Gipses wie im ersten Beispiel.

### 2.7 Siebtes Beispiel

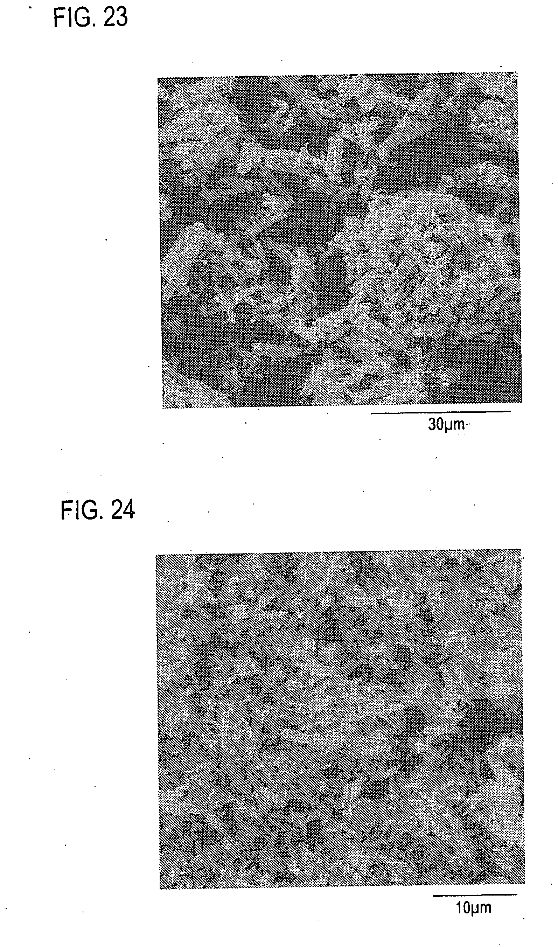

Gemäß dem siebten Beispiel wird eine Suspension analog zum dritten Beispiel umgewandelt, der Staubanteil beträgt jedoch 75 %, der REA-Gips-Anteil 25 %. Das Umwandlungsprodukt weist eine spezifische Oberfläche nach Blaine von ca. 10360 cm²/g auf. In den **Fig. 21**, **23** sind die prismatischen Kristalle nach 30 Minuten Haltezeit bei 125°C wiedergegeben. Die Kristalle sind im Mittel ca. 10 µm lang und haben ein typisches L/D-Verhältnis von 4. Der Feinanteil ist gegenüber allen Proben deutlich erhöht.

Bei Calciumsulfat-Dihydrat mit 100%iger Reinheit beträgt der Kristallwassergehalt 20,9 Gew.%, bei Calciumsulfat-Halbhydrat mit 100%iger Reinheit 6,2 Gew.%. Bei den vorhandenen Reinheiten beträgt der Kristallwassergehalt für eine abgeschlossene Umwandlung zu Calciumsulfat-Halbhydrat etwa 6,0 Gew.%. Je nach Mischung liegen in den Beispielen 3 bis 7 bereits nach zehn Minuten Kristallwassergehalte von 6,0 Gew.% bis maximal 7,7 Gew.% vor. Bis auf geringe Rest-Dihydrat-Gehalte ist die Umsetzung damit bei allen Proben mit Gipsfaserstaubzusatz bereits nach zehn Minuten, bei den Proben im dritten und vierten Beispiel sogar unmittelbar nach Erreichen der Temperatur von 125°C erfolgt.

Die Kristallmorphologie und die spezifische Oberfläche nach Blaine ändern sich bei den Beispielen 3 bis 7 zwischen Haltezeiten von 0 bzw. 10 und 60 Minuten nicht oder nur unwesentlich.

Die für die Herstellung von Gipsfaserplatten positiven Eigenschaften stellen sich mit den so erzeugten Bindemitteln ein, wenn durch geeignete Additive kurzprismatische Kristalle mit einem L/D-Verhältnis von 1 bis 10, bevorzugt kleiner 5, erzeugt werden. Bei größerem L/D-Verhältnissen stellte sich bei der Herstellung ein höherer Wasseranspruch für gleiches Fließverhalten ein. Zusätzlich wiesen die hiermit hergestellten Gipsfaserplatten schlechtere Biegezugfestigkeiten auf. Die Bedeutung des L/D- bzw. Aspekt-Verhältnisses wird anhand der Ergebnisse in später folgender Tabelle verdeutlicht.

### 2.8 Achtes Beispiel

In einem weiteren Beispiel (achtes Beispiel) wurde im Reaktor gezielt α-Calciumsulfat-Halbhydrat mit unterschiedlichen L/D-Verhältnissen und unterschiedlichen Blaine-Werten aus REA-Gips, Gipsfaserstaub sowie aus Mischungen beider Komponenten erzeugt. Die Suspension wurde nach dem Ablassen aus dem Reaktor filtriert und nach mehrfachem Ausspülen mit Spiritus getrocknet. Nach der Trocknung lag das hergestellte α-Calciumsulfat-Halbhydrat in Pulverform vor.

Jeweils 270 g des α-Calciumsulfat-Halbhydrat Pulvers und 495 g Papierfaserpulpe (bestehend aus 5 % Altpapierfasern aus Tetra Pak-Abfällen und 95 % Wasser) und 0,5 g des Abbindeverzögerers Aminoplus 90 L der Firma Sicit wurden zu einer Gipsfasermischung verarbeitet. Der Fasergehalt der Gipsfasermischung beträgt 8,4 % bezogen auf den Anteil an Fasern und Gips, wobei der durch den Gipsfaserstaub eingebrachte Faseranteil nicht eingerechnet ist.

Auf einer Labordruckfilterpresse wurde das Produkt bei 10 MPa mit einer Druckhaltezeit von 60 s entwässert (ober- und unterseitige Filtration über Siebgewebeplatten) und verdichtet. Die Pressform zur Herstellung der Prismen weist eine Grundfläche 40x160 mm auf. Die Presslinge wurden auf Dicken zwischen 29 und 32 mm gepresst, nach dem Abbinden und Trocknen auf eine Dicke von 27 bis 28 mm geschliffen und anschließend mit einem Auflagerabstand von 100 mm auf Biegezugfestigkeit geprüft (vgl. die in **Fig. 36** gezeigte Tabelle).

Unabhängig vom Blaine-Wert und den Kristallabmessungen zeigt sich anhand der Ergebnisse in der in **Fig. 36** gezeigten Tabelle eindeutig, dass sich nadelige Kristalle mit hohem Aspekt-Verhältnis negativ auf die Festigkeit auswirken. Kleine Kristallgrößen des α-Calciumsulfat-Halbhydrats und ein geringes Aspekt-Verhältnis wirken sich unabhängig von den Ausgangsrohstoffen positiv auf die Festigkeiten aus. Sogar bei Verwendung von α-Calciumsulfat-Halbhydrat aus reinem Gipsfaserschleifstaub konnten hochwertige Gipsfaserprobekörper hergestellt werden, die bei vergleichbarer Dichte wesentlich bessere Festigkeiten aufwiesen als bei Verwendung von nadelförmigem α-Calciumsulfat-Halbhydrat aus reinem REA-Gips. Das nadelförmige Produkt aus reinem Gipsfaserstaub konnte als alleiniger Rohstoff nicht entwässert werden.

Somit bildet auch die Herstellung und Verwendung von α-Calciumsulfat-Halbhydrat mit geringen Aspekt-Verhältnissen aus reinen gipshaltigen Abfallstoffen, insbesondere Gipsfaserstaub, einen Teil des erfindungsgemäßen Verfahrens, wobei das erfindungsgemäße Verfahren vorrangig die Herstellung und Verwendung von α-Calciumsulfat-Halbhydrat aus reinem Gipsfaserstaub gemischt mit REA-Gips betrifft. Zur Einstellung des geringen Aspekt-Verhältnisses sind alle aus der Literatur bekannten Zusatzstoffe denkbar. Bevorzugt sind Dicarbonsäuren, insbesondere Bernsteinsäure, verwendbar.

Gemäß einer weiteren Ausführungsform des erfindungsgemäßen Verfahrens respektive der zweiten Untersuchungsreihe wird die heiße α-Calciumsulfat-Halbhydrat Suspension in eine Gipsfasermischung eingearbeitet, entwässert und anschließend zu Gipsfaserplatten geformt.

Der große Vorteil bei der Erzeugung von im Rahmen des erfindungsgemäßen Verfahrens hergestellten α-Calciumsulfat-Halbhydrat mit dem Suspensionsverfahren ist die direkte Verarbeitung der α-Calciumsulfat-Halbhydrat enthaltenden heißen α-Calciumsulfat-Halbhydrat Suspension durch Mischen mit einer Fasern enthaltenden Pulpe und Additiven zur Gipsfasermischung, die anschließend zu Gipsfaserplatten entwässert und geformt wird. Dadurch werden die energie- und kostenaufwändigen Verfahrensschritte Filtration, Trocknung und Mahlung eingespart, die erforderlich sind, um α-Calciumsulfat-Halbhydrat nach dem herkömmlichen Suspensionsverfahren herzustellen.

Aus dem Stand der Technik ist es bekannt, Gips mit einer Holz- oder Papierfaserpulpe gemischt als Suspension zu α-Calciumsulfat-Halbhydrat umzuwandeln und anschließend zu Gipsfaserplatten zu formen. Das Prinzip kann so abgewandelt werden, dass ein bevorzugtes Aspekt-Verhältnis von bevorzugt 10 bis 20, aber maximal 50 für das α-Calciumsulfat-Halbhydrat eingestellt wird. Dies wird durch Zusatz von Salzen mit bevorzugt 0,1 bis 1 Gew.-%, wie z. B. Aluminium-, Eisen (II/III)- oder Zinksulfat, in die Suspension aus Gips und Papier oder Holzfasern erreicht. Durch diese Zusatzstoffe kann die Temperatur im Vergleich zu 140 bis 152°C und 12 bis 25 Minuten Haltezeit ohne Zusatzstoffe auf minimal 121 bis 126°C und Haltezeiten auf minimal 6 bis 15 Minuten reduziert werden.

Das erfindungsgemäße Verfahren erlaubt es dahingegen, auch ohne entsprechende Zusätze vergleichbare Temperaturen und Haltezeiten zu realisieren.

Ferner ist es bei den aus dem Stand der Technik bekannten Verfahren nachteilig, nur ein geringer Feststoffanteil in den jeweiligen Suspensionen vorhanden ist, da α-Calciumsulfat-Halbhydrat-Kristalle mit hohem Aspekt-Verhältnis zur Verarbeitung einen hohen Wasseranteil benötigen. Je höher das Aspekt-Verhältnis, desto höher ist der Wasserbedarf bei gleichbleibender Viskosität der Suspension. Ein Zusatz von Pulpe bewirkt eine zusätzliche Erhöhung des Wasserbedarfes für eine gleichbleibende Viskosität. Hinzu kommt, dass Wasser etwa die vierfache spezifische Wärmekapazität als Gips aufweist. Demzufolge bewirkt ein hoher Wasseranteil einen entsprechend hohen Energiebedarf bei der Beheizung entsprechender Suspensionen. Umgekehrt dazu kann ein hoher Feststoffanteil in der Suspension zu erheblichen energetischen Einsparungen bei der Beheizung der Suspension führen.

Das Fließverhalten der Suspension ist wichtig in Bezug auf die Pumpfähigkeit und das Anhaftverhalten an Rühr- bzw. Mischwerkzeugen und Behältern, weshalb auch Messungen zum Fließmaß unterschiedlicher Suspensionen zur Herstellung von α-Calciumsulfat-Halbhydrat getätigt wurden. Das Fließmaß der untersuchten Mischungen wurde mit einem Messing-Ring der Höhe 5 cm und einem Innen-Durchmesser von 6 cm geprüft. Die heiße Suspension wurde in den Ring eingefüllt und Überstände bündig bis zur Oberkante abgestrichen. Der Ring wurde angehoben, so dass sich die Suspension sich auf einer glatten Oberfläche ausbreitet. Der Mittelwert der Abmessungen der beiden Diagonalen der ausgeflossenen Suspension wurde als Fließmaß festgelegt.

Mit dem erfindungsgemäßen Verfahren lässt sich eine ausreichend fließfähige Suspension einstellen, wenn ein Fließmaß von 20 bis 30 cm gegeben ist. Dies ist abhängig vom Verhältnis von Staub zu REA-Gips bei Feststoffgehalten von 35 bis 65 % der Fall. Mit zunehmendem Gipsfaserstaubanteil muss der Feststoffanteil reduziert werden. Damit liegen trotz der im Staub enthaltenen Fasern deutlich erhöhte Feststoffgehalte gegenüber dem Stand der Technik vor.

### 2.9 Neuntes Beispiel

Das nachfolgende Beispiel 9 (vgl. die in **Fig. 37** gezeigte Tabelle) verdeutlicht die Vorteile der direkten Vermischung der erfindungsgemäßen heißen α-Calciumsulfat-Halbhydrat Suspension aus Mischungen von Gipsfaserstäuben und REA-Gipsen mit der Papierfaserpulpe und gegebenenfalls mit Additiven. Die so hergestellte Gipsfasermischung wird unmittelbar nach der Vermischung in einer Produktionsanlage zur Herstellung von Doppelbodenplatten im Taktpressverfahren zu Gipsfaserplatten mit einer Kantenlänge von ca. 606 mm geformt. Nach dem Abbinden werden die Platten getrocknet und geschliffen. Die hergestellten Platten sind als Doppelboden verwendbar und wurden nach EN12825 im schwächsten Lastpunkt 2 auf starren Auflagern mit 90 mm Durchmesser auf Punktbelastbarkeit geprüft.

Die erfindungsgemäß hergestellten Mischungen mit Zusatz der heißen α-Calciumsulfat-Halbhydrat Suspensionen aus Mischungen von Gipsfaserstaub und REA-Gips weisen erhebliche Verbesserungen bei den statischen Eigenschaften gegenüber der Verwendung von herkömmlich trocken eingebrachten Calciumsulfat-Bindemitteln auf.

Vergleichsplatten aus herkömmlicher Produktion mit trocken eingearbeiteten Calciumsulfat-Bindemitteln weisen bei gleicher Dicke von 28 mm eine mittlere Bruchlast von 4400 N im Lastpunkt 2 und eine Kraft von 2817 N bei 2 mm Durchbiegung bei im Mittel 1500 kg/m³ auf.

Weiterhin ist unter Verwendung von mit den geprüften Mischungen aus Gipsfaserstaub und REA-Gips hergestelltem α-Calciumsulfat-Halbhydrat eine erhebliche Verbesserung der mechanischen Eigenschaften im Vergleich zur Verwendung von α-Calciumsulfat-Halbhydrat aus 100 % REA-Gips gegeben.

Die Mischung mit α-Calciumsulfat-Halbhydrat aus 100 % REA-Gips lässt sich zwar sehr schnell entwässern, ergibt aber Platten mit schlechten Festigkeiten (nur 83 % der Festigkeiten der herkömmlichen Produktion). Platten mit der Suspension aus 90 % REA-Gips und 10 % Schleifstaub und 75 % REA-Gips und 25 % Schleifstaub entwässern ebenfalls deutlich schneller als die herkömmliche Produktionsmischung, weisen aber deutlich erhöhte Festigkeiten auf (18 bis 34 % höher als die mittlere Bruchlast der Platten aus der herkömmlicher Produktion). Die Punktbelastbarkeit der geprüften Bodenelemente ist bei Anteilen von 25 bis 75 % Staub aus Gipsfaserplatten annähernd gleich und fällt erst bei 90% REA-Gips-Anteil geringfügig ab.

Die Biegezugfestigkeit ist über den Bereich 25 bis 90 % REA-Gips annähernd konstant und fällt erst bei Verwendung von 100 % REA-Gips deutlich ab. Die Biegezugfestigkeiten sind für alle Mischungen etwa 50 bis 60 % höher als bei alleiniger Verwendung des REA-Gipses.

Die genannten Suspensionen wurden mit einem Feststoffanteil von 40 % hergestellt, wobei der Feststoffanteil abhängig vom Anteil des Staubes bis auf maximal 60 % erhöht werden kann. Damit liegt im Vergleich zum Stand der Technik, welcher einen Feststoffanteil im Bereich von 30 % beschreibt, ein deutlich erhöhter Feststoffanteil vor, der gemäß obigen Ausführungen zur unterschiedlichen spezifischen Wärmekapazitäten von Wasser und Feststoff eine deutlich energieärmere Herstellung ermöglicht.

Weiterhin wurde überraschend festgestellt, dass durch Verwendung von Gipsfaser-Kreislaufwasser mit und ohne Kombination von bestimmten die Kristallmorphologie bzw. den Kristallhabitus beeinflussenden Zusätzen Verbesserungen gegenüber der alleinigen Verwendung von die Kristallmorphologie beeinflussenden Zusätzen erzielt werden.

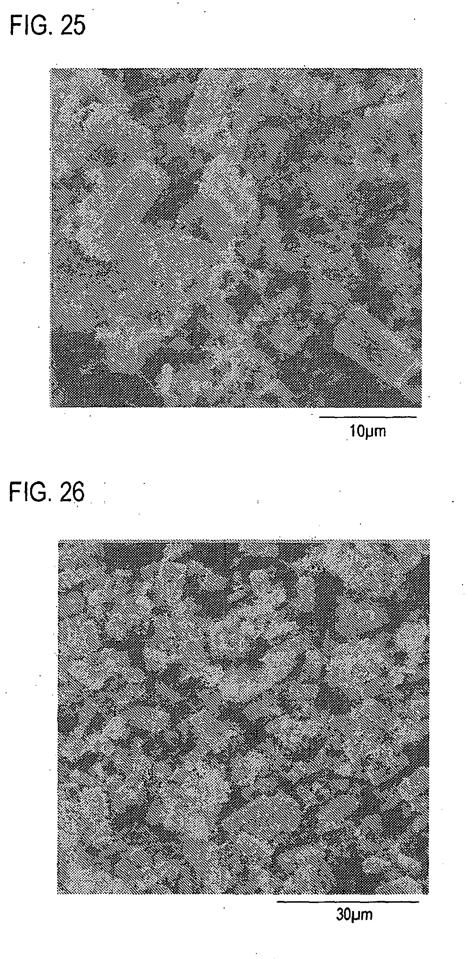

Bei gleicher zugegebener Menge des Zusatzes entstehen unter Verwendung von Kreislaufwasser deutlich kompaktere Kristalle mit geringerem Aspekt-Verhältnis. Bei Verwendung des Gipsfaserstaubes als alleinigen Gipsrohstoff entstehen bei Zusatz von 0,1 % Bernsteinsäure und Frischwasser im Vergleich deutlich kleinere Kristalle mit nur ca. 3 µm Länge (**Fig. 24**), die erheblich schlechter entwässerbar sind als bei Verwendung von Kreislaufwasser aus der Gipsfaserplattenproduktion. Die unter Verwendung des Kreislaufwassers entstandenen Kristalle sind deutlich größer und weisen ein kleineres Aspekt-Verhältnis auf (**Fig. 25, 26**). Das α-Calciumsulfat-Halbhydrat lässt sich als alleiniges Bindemittel zur Herstellung von Gipsfaserplatten verwenden, die Gipsfaserplatten weisen sehr gute Festigkeiten auf (siehe Gipsfaserprobekörper in **Fig. 36**, Zeile 4).

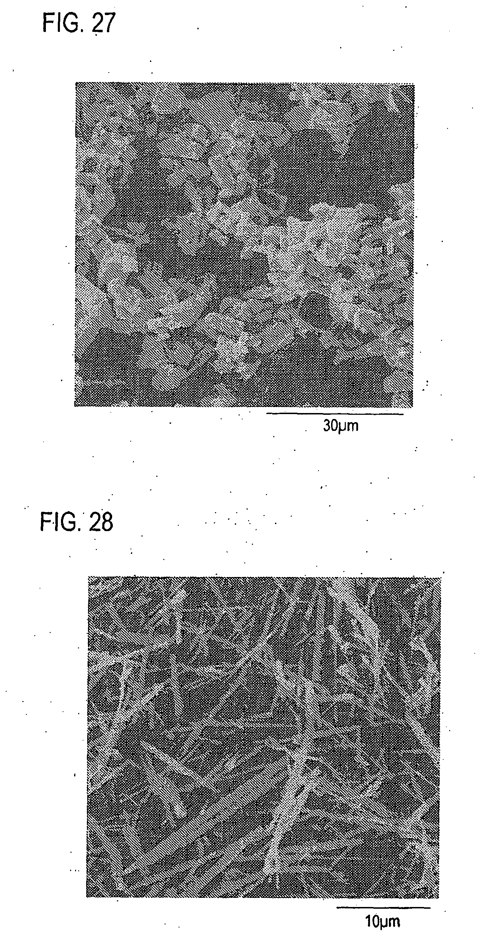

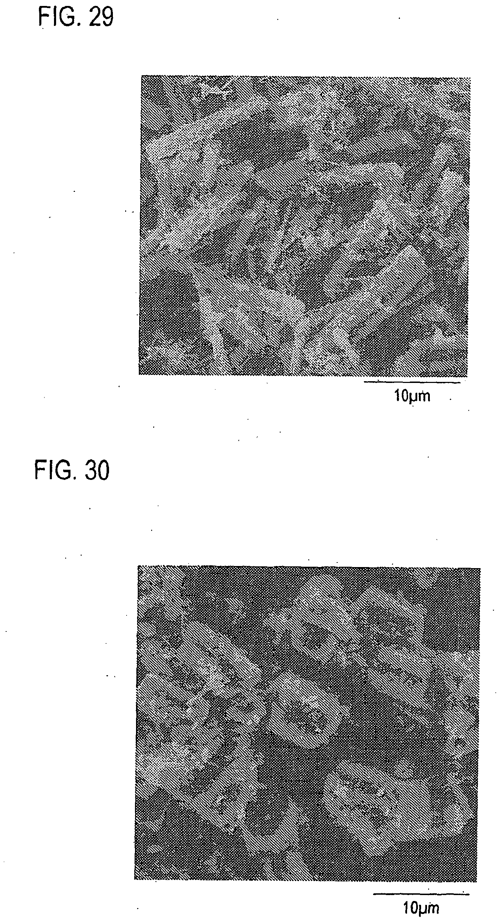

Für eine Mischung aus 50 % Gipsfaserstaub und 50 % REA-Gips ist der Einfluss des Gipsfaserkreislaufwassers im Vergleich zum Frischwasser mit und ohne Additiv auf den **Fig. 20****,** **28** bis **30**) dargestellt. Mit Frischwasser ergeben sich ohne Zusatz von Additiven nur nadelförmige Kristalle mit einem Aspekt-Verhältnis von typischerweise über 10 (**Fig. 28**), mit Gipsfaserkreislaufwasser ohne Zusatz von Additiven werden kurzprismatische Kristalle mit deutlich reduziertem Aspekt Verhältnis hergestellt (**Fig. 29**).

Ähnlich groß sind die Unterschiede, wenn zum Frischwasser und Kreislaufwasser Bernsteinsäure zugesetzt wird (**Fig. 20****,** **30**). Die Suspension mit den nadeligen Kristallen lässt sich nur mit geringen Feststoffgehalten von maximal 25 % herstellen, und sich eingearbeitet in eine Gipsfasermischung nur schlecht entwässern. Es werden im Vergleich schlechte Festigkeitswerte erzielt.

Es zeigte sich zudem, dass die erfindungsgemäß hergestellten α-Calciumsulfat-Halbhydrat Suspensionen sowohl nach vorheriger Trocknung als auch bei direkter Verwendung der Suspension mit und ohne Zusatz von Fasern gut und schnell auch ohne Druck nur durch Vakuum filtrierbar sind. Damit sind die erfindungsgemäß verwendeten Rohstoffe nicht nur für die Herstellung von Gipsfaserplatten im nassen Verfahren mit Pressdruck verwendbar, sondern auch bei Verfahren, die gravimetrisch und mit Vakuum entwässern, wie z. B.. Langsiebmaschinen oder Hatschek-Anlagen, eventuell unterstützt durch eine anschließende Verpressung.

Weiterhin wurde festgestellt, dass sich auch Zusätze von anderen, ansonsten schlecht verwertbaren Rohstoffen wie Sedimentationsschlamm aus der Filtratbehandlung der Gipsfaser-Kreislaufwässer, gemahlene Gipsfaserabfälle oder aber vom Gipskarton separierte feinteilige Gipsabfälle anstelle eines Teiles der REA-Gipse oder des Staubes zusetzen lassen, ohne dass die vorher genannten Vorteile negativ beeinflusst werden. Vorteilhaft ist aber immer ein Zusatz von feinkörnigem Gipsfaserstaub, da dieser wesentliche Vorteile für eine schnelle Umwandlung bei vergleichsweise geringen Temperaturen bringt.

### 2.10 Zehntes Beispiel

Im Rahmen eines zehnten Beispiels erfolgte die Herstellung analog zu Beispiel 9, jedoch wird ein Sedimentationsschlamm anstelle des Gipsfaserstaubes verwendet. Der Gipsrohstoff besteht bezogen auf die Trockenstoffe zu 50 % aus Sedimentationsschlamm und zu 50 % aus REA-Gips und wird in einer wässrigen Suspension mit einem Feststoffanteil von 40 % bei 125°C behandelt.

Nach der Röntgenbeugungsanalyse war der getrocknete Sedimentationsschlamm frei von Anhydrit und wies 0,6 % α-Calciumsulfat-Halbhydrat und 99,4 % Calciumsulfat-Dihydrat auf. Der Faseranteil lag unter 1 %. Damit liegt ähnlich wie beim REA-Gips fast reines Calciumsulfat-Dihydrat vor. Der Blaine-Wert betrug ca. 10230 cm²/g. Eine Korngrößenanalyse ergab eine Korngrößenverteilung von x₅₀ 6,4 µm, x₁₀ 2,0 µm, x₉₀ 16,3 µm sowie ein Anteil an Partikein kleiner als 5 µm von ca. 40 %. Die Spanne betrug 2,2. Der Feinkornanteil an Partikeln kleiner als 5 µm ist im Vergleich zu dem in den vorher genannten Beispielen verwendeten Gipsfaserstaub deutlich erhöht, die mittlere Korngröße deutlich reduziert. Der Blaine-Wert ist ähnlich wie beim Gipsfaserstaub.

Das bei der Umwandlung im Beispiel 10 entstandene α-Calciumsulfat-Halbhydrat weist die gewünschte Kristallisationsform und die gewünschte Kristallgröße auf (**Fig. 27**) und lässt sich nach Mischung mit einer Papierfaserpulpe zu Gipsfaserplatten sehr hoher Festigkeiten verarbeiten. Entsprechende Gipsfaserplatten weisen nach dem Schleifen auf 24 mm eine mittlere Bruchlast von 4844 N bei einer Dichte von 1470 kg/m³ auf. Im Vergleich zur jetzigen Gipsfaserplatte aus einer herkömmlichen Mischung werden also mit 24 mm Dicke bessere Bruchlasten erzielt als mit der herkömmlichen Mischung mit 28 mm Dicke.

Die Biegefestigkeit der aus den Platten geschnittenen Probekörper betrug bei vergleichbarer Prüfung wie in obiger Tabelle im Mittel 21,9 N/mm². Die Biegefestigkeit ist etwa doppelt so hoch wie die, die mit dem α-Calciumsulfat-Halbhydrat aus reinem REA-Gips erzielt wurde.

Die Umwandlung ist bereits 20 Minuten nach Erreichen der Temperatur von 125°C zum großen Teil abgeschlossen (Kristallwassergehalt 8,1 Gew. %), trotzdem liegen nach 60 Minuten noch Reste an Dihydrat vor (Kristallwässergehalt: 7,0 Gew.%, Ziel: 6,2 Gew.%). Damit erfolgt die vollständige Umwandlung im Vergleich zur Verwendung von Gipsfaserstaub verlangsamt.

Die Untersuchungen des zehnten Beispiels verdeutlichen, dass nicht nur die feine Korngröße der Gipsfaserstäube maßgeblich für die schnelle Umwandlungsgeschwindigkeit ist. Möglicherweise hat auch die durch Schleif- und Fräsprozesse aktivierte Oberfläche der Partikel einen erheblichen Einfluss auf die schnelle Umwandlung.

Die Kristallgrößen, die spezifische Oberfläche (nach Blaine) und der enthaltene Feinanteil sind auch über die Temperatur der Umwandlung zu beeinflussen. Eine höhere Temperatur bewirkt eine höhere Übersättigung.

Bei höherer Temperatur erfolgt eine schnellere Umsetzung zu α-Calciumsulfat-Halbhydrat, es bilden sich zudem kleinere Kristalle als eine bei geringerer Temperatur. Für eine schnelle Umsetzung von Mischungen aus Gipsfaserstaub und REA-Gips sind Temperaturen von 120-125°C ausreichend, was im folgenden Beispiel 11 verdeutlicht wird.

### 2.11 Elftes Beispiel

Gemäß Beispiel 11 wird eine Mischung aus 50 % Gipsfaserstaub und 50 % REA-Gips in einer wässrigen Suspension aus Kreislaufwasser anstelle bei einer Temperatur von 125°C bei 115°C und bei 135°C umgewandelt. Die Umwandlung bei 125°C ist nach etwa 10 Minuten abgeschlossen, die spezifische Oberfläche nach Blaine beträgt 5990 cm²/g (siehe die in **Fig. 36** gezeigte Tabelle). Die Umwandlung bei 115°C ist erst nach 220°C bis 240 Minuten abgeschlossen. Das Produkt weist eine spezifische Oberfläche nach Blaine von 5436 cm²/g auf. Die Kristalle weisen eine glättere Oberfläche mit besser ausgebildeten Kopfflächen auf. Die Umwandlung bei 135°C ist nach 0 bis 10 Minuten abgeschlossen. Das Produkt weist eine spezifische Oberfläche nach Blaine von 8412 cm²/g auf.

Für die schnelle vollständige Umwandlung der Gipsfaserstäube in Gegenwart von Zusätzen, welche das Aspekt-Verhältnis reduzieren, reicht ohne Zusatz von REA-Gips bereits eine Temperatur von 110°C. bis 115°C aus, die Umwandlung erfolgt nach Umwandlungszeiten von 0 bis 10 Minuten. Bei Umwandlung der Stäube ohne Zusätze reicht bereits eine Umwandlungstemperatur von etwa 105°C aus. Die schlagartig erzeugten Kristalle sind auch für die Verwendung als Keimkristalle einsetzbar.

Selbstverständlich können auch alle üblicherweise bei der Gipsfaserplattenherstellung verwendeten Additive zur Beeinflussung der Verarbeitbarkeit wie Abbindeverzögerer, Abbindebeschleuniger, Entwässerungshilfsmittel, Entschäumer, Verflüssiger und Funktionszusätze wie Hydrophobierungsmittel (z. B. Paraffine, Wachse oder siliciumorganische Verbindungen) zugesetzt werden. Die Mengenanteile sollten 3 % nicht übersteigen.

Auch ist der Zusatz von Füllstoffen, sei es zur Gewichtsreduzierung, Gewichtserhöhung, zur Anpassung der mechanischen Eigenschaften oder als Brandschutzzusatz (z. B. Tonminerale, Kalk, Dolomit, Vermiculit), zur erfindungsgemäßen Gipsmischung möglich.

Das erfindungsgemäß aus den gipshaltigen Abfallstoffen erzeugte α-Calciumsulfat-Halbhydrat lässt sich in getrockneter Form auch für die Herstellung, von Gipsfaserplatten im trockenen Verfahren und für andere Gipsprodukte wie z. B. Gipskartonplatten, Vollgipsplatten und Trockenmörtelprodukte verwenden.

Auch als heiße Suspension lässt sich das α-Calciumsulfat-Halbhydrat für die Herstellung von Gipskartonplatten oder Vollgipsplatten verwenden. In diesem Fall kann es erforderlich sein, nur noch die erforderlichen Additive wie z. B. Beschleuniger, Schaum und Fließmittel zuzusetzen. Durch geringfügiges Abkühlen, Vorentwässern oder Nachverdünnen der Suspension kann die Reaktivität und das Fließmaß angepasst werden. Das Fließmaß respektive die Viskosität lassen sich aber auch durch die geeignete Abmischung und den geeigneten Feststoffgehalt direkt auf Werte einstellen, die zur Herstellung von Gipskartonplatten oder Vollgipsplatten erforderlich sind.

Die im Rahmen der ersten und zweiten Untersuchungsreihe verwendeten Additive sind insbesondere:
- Bernsteinsäure als Bernsteinsäureanhydrid C₄H₆O₄, Reagent Plus >99 % von Sigma Aldrich (prozentuale Angaben zum Zusatz von Bernsteinsäure im Text oder in den Figuren beziehen sich immer auf den Anteil an Bernsteinsäureanhydrid bezogen auf den eingesetzten, trockenen Gips vor der Umwandlung.),
- Oxalsäure als Oxalsäureanhydrid C₂H₂O₄, puriss. p.a. von Sigma Aldrich (Oxalsäure wird Im Text und den Figuren zum Teil mit "OS" abgekürzt. Prozentuale Angaben zum Zusatz von Oxalsäure im Text oder in den Figuren beziehen sich immer auf den Anteil an Oxalsäureanhydrid bezogen auf den eingesetzten, trockenen Gips vor der Umwandlung.),
- Aluminiumsulfat der Bezeichnung Aluminiumsulfat 17/18 % technisch der Firma Oker Chemie als Aluminiumsulfattetradecahydrat: Al₂(SO₄)₃ x 14 H₂O mit mindestens 17 % Aluminium (Im Text und den Figuren wird der Zusatz von Aluminiumsulfattetradecahydrat zum Teil mit "AS", "Al" oder "Al-sulfat" abgekürzt. Prozentuale Angaben zum Zusatz von Aluminiumsulfat im Text oder in den Figuren beziehen sich immer auf den Anteil an Aluminiumsulfattetradecahydrat bezogen auf den eingesetzten, trockenen Gips vor der Umwandlung.),
- Eisensulfat als Eisensulfatheptahydrat: Fe(II)SO₄ x 7 H₂O (>99,5 % Ph.Eur.) von Merck. Anteil Eisen: 20,1 % (Im Text und den Figuren wird der Zusatz von Eisensulfatheptahydrat mit "Fe" abgekürzt. Prozentuale Angaben zum Zusatz von Eisensulfat im Text oder in den Figuren beziehen sich immer auf den Zusatz von Eisensulfatheptahydrat bezogen auf den eingesetzten, trockenen Gips vor der Umwandlung.),
- Abbindeverzögerer: Produktbezeichnung: Aminoplus 90 L von Sicit, Flüssigkeit auf Basis von Aminosäuren/Peptiden mit 42-44 % Feststoffanteil (Prozentuale Angaben zum Zusatz von Aminoplus im Text oder in den Figuren beziehen sich immer auf den Zusatz von Aminoplus bezogen auf den eingesetzten, trockenen Gips vor der Umwandlung.).

## Patentansprüche

1. Verfahren zur Herstellung von α-Calciumsulfat-Halbhydrat,umfassend die folgenden Schritte:
- Vermischen von wenigstens einem gipshaltigen Abfallstoff und wenigstens einem REA-Gips mit Wasser unter Zugabe einer Dicarbonsäure zur Bildung einer wässrigen Suspension,
- Erhitzen der Suspension in einem Druckbehälter und Halten der erhitzten Suspension auf der Erhitzungstemperatur, wobei der wenigstens eine gipshaltige Abfallstoff und der wenigstens eine REA-Gips zu α-Calciumsulfat-Halbhydrat umgesetzt wird,
- Abtrennen des α-Calciumsulfat-Halbhydrats aus der Suspension oder Zuführen der Suspension zu einem Prozess zur Herstellung von Gipsplatten oder Gipsfaserplatten.

2. Verfahren nach Anspruch 1, **dadurch gekennzeichnet, dass** als gipshaltiger Abfallstoff gipshaltige Stäube, insbesondere von beim Bearbeiten von Gipsfaserplatten entstehende Schleif-, Fräs und Sägestäube, oder zerkleinerter Gipsschlamm, Gipsfaserabfall oder zerkleinerte Gipskartonabfälle oder eine Mischung der Genannten verwendet wird.

3. Verfahren nach Anspruch 2, **dadurch gekennzeichnet, dass** den gipshaltigen Stäuben ein keimbildendes Additiv, insbesondere in Form von zusätzlichem α-Calciumsulfat-Halbhydrat, zugegeben wird.

4. Verfahren nach Anspruch 2 oder 3, **dadurch gekennzeichnet, dass** der verwendete gipshaltige Abfallstoff einen Anteil an Calciumsulfat-Halbhydrat im Bereich von 5 bis 70 %, insbesondere von 10 bis 40 %, aufweist.

5. Verfahren nach einem der vorangehenden Ansprüche, **dadurch gekennzeichnet, dass** die Erhitzung der Suspension auf eine Temperatur im Bereich von 105 bis 150°C, insbesondere im Bereich von 115 bis 135°C, bevorzugt bei 115°C oder 125°C, erfolgt.

6. Verfahren nach einem der vorangehenden Ansprüche, **dadurch gekennzeichnet, dass** der Suspension die Dicarbonsäure, bevorzugt Bernsteinsäure, mit einem Anteil im Bereich von 0,001 bis 1 Gew.-%, insbesondere 0,01 bis 0,2 Gew.-% bezogen auf die Feststoffe, zugegeben wird.

7. Verfahren nach einem der vorangehenden Ansprüche, **dadurch gekennzeichnet, dass** der Suspension Aluminiumsulfat oder Eisensulfat, vorzugsweise mit einem Anteil im Bereich von 0,1 bis 2 Gew.-%, insbesondere im Bereich von 0,3 bis 1 Gew.-%, zugegeben wird.

8. Verfahren nach einem der vorangehenden Ansprüche, **dadurch gekennzeichnet, dass** der Suspension wenigstens ein Additiv auf Proteinbasis, vorzugsweise mit einem Anteil im Bereich von 0,01 bis 1 Gew.-%, insbesondere 0,01, bis 0,5 Gew.-% bezogen auf die Feststoffe, zugegeben wird.

9. Verfahren nach einem der vorangehenden Ansprüche, dass die Haltezeit im Bereich von 1 bis 90 Minuten, insbesondere 1 bis 60 Minuten, bevorzugt 1 bis 45 Minuten, insbesondere 10 bis 20 Minuten, liegt.

10. Verfahren nach einem der vorangehenden Ansprüche, **dadurch gekennzeichnet, dass** das zur Verwendung zur Mischung der Suspension verwendete Mischungsverhältnis von gipshaltigem Abfallstoff zu REA-Gips zwischen 10:1 und 1:10, insbesondere zwischen 3:1 und 1:3, beträgt.

11. Verfahren nach einem der vorangehenden Ansprüche, **dadurch gekennzeichnet, dass** das Erhitzen der Suspension enthaltend gleiche Anteile an gipshaltigem Abfallstoff und REA-Gips erst nach einer bestimmten Vorlagerzeit, insbesondere von 1 bis 120 Minuten, insbesondere 1 bis 60 Minuten, bevorzugt 30 Minuten, erfolgt.

12. Verfahren nach einem der Ansprüche 1 bis 10, **dadurch gekennzeichnet, dass** das Erhitzen der Suspension erst nach einer bestimmten Vorlagerzeit, insbesondere von 1 bis 120 Minuten, insbesondere 1 bis 60 Minuten, bevorzugt 30 Minuten, erfolgt.

13. Verfahren nach einem der vorangehenden Ansprüche, **dadurch gekennzeichnet, dass** der Suspension Säuresalze, insbesondere Dicarbonsäuresalze, zugegeben werden.

14. Verfahren nach einem der vorangehenden Ansprüche, ausgenommen Anspruch 7, **dadurch gekennzeichnet, dass** der Suspension ein wachstumsbeeinflussendes Additiv, insbesondere in Form wenigstens eines Metallsalzes, insbesondere Aluminium und/oder Eisensalzes, zugegeben wird.

15. Verfahren nach einem der vorangehenden Ansprüche, **dadurch gekennzeichnet, dass** als Wasser zur Bildung der Suspension Kreislaufwasser aus der Gipsplattenherstellung verwendet wird.

16. Verfahren nach einem der vorangehenden Ansprüche, **dadurch gekennzeichnet, dass** es kontinuierlich oder diskontinuierlich durchgeführt wird.

17. Verfahren nach einem der vorangehenden Ansprüche, **dadurch gekennzeichnet, dass** der Suspension wenigstens ein weiteres Additiv aus der Gruppe: Abbindebeschleuniger, Entwässerungshilfsmittel, Entschäumer, Verflüssiger, Hydrophobierungsmittel, insbesondere Paraffine oder Siloxane, vorzugsweise mit einem Anteil von 1 bis 3 Gew.-%, zugeben wird.

18. Verfahren nach einem der vorangehenden Ansprüche, **dadurch gekennzeichnet, dass** ein Additiv in Form eines Brandschutzmittels, vorzugsweise mit einem Anteil von 1 bis 20 Gew.- %, zugegeben wird.

19. Verfahren nach einem der vorangehenden Ansprüche, **dadurch gekennzeichnet, dass** die Suspension einen Feststoffanteil im Bereich von 15 bis 70 %, insbesondere 35 bis 55 % aufweist.

20. Verfahren nach einem der vorangehenden Ansprüche, **dadurch gekennzeichnet, dass** die α-Calciumsulfat-Halbhydrat Suspension oder das davon abgetrennte α-Calciumsulfat-Halbhydrat einem Prozess zur Herstellung von Gipsplatten oder Gipsfaserplatten zugeführt wird, wobei das α-Calciumsulfat-Halbhydrat in eine, gegebenenfalls bereits anderweitig hergestellte Calciumsulfat-Halbhydrat enthaltende, Gipsmischung oder Gipsfasermischung eingearbeitet wird und aus der Gipsmischung oder der Gipsfasermischung Gipsplatten oder Gipsfaserplatten hergestellt werden.

21. Verfahren nach Anspruch 20, **dadurch gekennzeichnet, dass** die α-Calciumsulfat-Halbhydrat Suspension vor Einarbeitung in die Gipsmischung oder Gipsfasermischung in einem beheizbaren Rührbehälter, insbesondere bei Temperaturen im Bereich von 65 bis 100°C, bevorzugt im Bereich von 85 bis 95°C, gelagert wird.

## Claims

1. Process for preparing α-calcium sulfate hemihydrate, which comprises the following steps:
- mixing of at least one gypsum-containing waste material and at least one flue gas desulfurization gypsum with water, with addition of a dicarboxylic acid, to form an aqueous suspension,
- heating of the suspension in a pressure vessel and maintenance of the heated suspension at the heating temperature, where the at least one gypsum-containing waste material and the at least one flue gas desulfurization gypsum are converted into α-calcium sulfate hemihydrate,
- separation of the α-calcium sulfate hemihydrate from the suspension or introduction of the suspension into a process for producing gypsum plasterboards or gypsum fibre boards.

2. Process according to Claim 1, **characterized in that** gypsum-containing dusts, in particular grinding, milling machine and extraction dusts formed in the working of gypsum fibre boards, or comminuted gypsum slurry, gypsum fibre waste or comminuted gypsum/cardboard waste or a mixture of the abovementioned is used as gypsum-containing waste material.

3. Process according to Claim 2, **characterized in that** a nucleating additive, in particular in the form of additional α-calcium sulfate hemihydrate, is added to the gypsum-containing dusts.

4. Process according to Claim 2 or 3, **characterized in that** the gypsum-containing waste material used has a proportion of calcium sulfate hemihydrate in the range from 5 to 70%, in particular from 10 to 40%.

5. Process according to any of the preceding claims, **characterized in that** the heating of the suspension is carried out to a temperature in the range from 105 to 150°C, in particular in the range from 115 to 135°C, preferably at 115°C or 125°C.

6. Process according to any of the preceding claims, **characterized in that** the dicarboxylic acid, preferably succinic acid, is added to the suspension in a proportion in the range from 0.001 to 1% by weight, in particular from 0.01 to 0.2% by weight, based on the solids.

7. Process according to any of the preceding claims, **characterized in that** aluminium sulfate or iron sulfate is added to the suspension, preferably in a proportion in the range from 0.1 to 2% by weight, in particular in the range from 0.3 to 1% by weight.

8. Process according to any of the preceding claims, **characterized in that** at least one additive based on protein is added to the suspension, preferably in a proportion in the range from 0.01 to 1% by weight, in particular from 0.01 to 0.5% by weight, based on the solids.

9. Process according to any of the preceding claims, **characterized in that** the hold time is in the range from 1 to 90 minutes, in particular from 1 to 60 minutes, preferably from 1 to 45 minutes, in particular from 10 to 20 minutes.

10. Process according to any of the preceding claims, **characterized in that** the mixing ratio of gypsum-containing waste material to flue gas desulfurization gypsum used for mixing of the suspension is in the range from 10:1 to 1:10, in particular from 3:1 to 1:3.

11. Process according to any of the preceding claims, **characterized in that** the heating of the suspension containing equal proportions of gypsum-containing waste material and flue gas desulfurization gypsum occurs only after a particular preliminary storage time, in particular from 1 to 120 minutes, in particular from 1 to 60 minutes, preferably 30 minutes.

12. Process according to any of Claims 1 to 10, **characterized in that** the heating of the suspension occurs only after a particular preliminary storage time, in particular from 1 to 120 minutes, in particular from 1 to 60 minutes, preferably 30 minutes.

13. Process according to any of the preceding claims, **characterized in that** acid salts, in particular dicarboxylic acid salts, are added to the suspension.

14. Process according to any of the preceding claims with the exception of Claim 7, **characterized in that** a growth-influencing additive, in particular in the form of at least one metal salt, in particular an aluminium and/or iron salt, is added to the suspension.

15. Process according to any of the preceding claims, **characterized in that** circulation water from the production of gypsum plasterboards is used as water for forming the suspension.

16. Process according to any of the preceding claims, **characterized in that** it is carried out continuously or batchwise.

17. Process according to any of the preceding claims, **characterized in that** at least one further additive from the group consisting of: setting accelerators, dewatering aids, antifoams, plasticizers, hydrophobicizing agents, in particular paraffins or siloxanes, is added to the suspension preferably in a proportion of from 1 to 3% by weight.

18. Process according to any of the preceding claims, **characterized in that** an additive in the form of a flame retardant is added, preferably in a proportion of from 1 to 20% by weight.

19. Process according to any of the preceding claims, **characterized in that** the suspension has a proportion of solids in the range from 15 to 70%, in particular from 35 to 55%.

20. Process according to any of the preceding claims, **characterized in that** the **α**-calcium sulfate hemihydrate suspension or the **α**-calcium sulfate hemihydrate which has been separated off therefrom is introduced into a process for producing gypsum plasterboards or gypsum fibre boards, where the **α**-calcium sulfate hemihydrate is incorporated into a gypsum plaster mixture or gypsum plaster/fibre mixture containing calcium sulfate hemihydrate which has optionally been produced in another way and gypsum plasterboards or gypsum fibre boards are produced from the gypsum plaster mixture or the gypsum plaster/fibre mixture.

21. Process according to Claim 20, **characterized in that** the **α**-calcium sulfate hemihydrate suspension is stored in a heatable stirred vessel, in particular at temperatures in the range from 65 to 100°C, preferably in the range from 85 to 95°C, before incorporation into the gypsum plaster mixture or gypsum plaster/fibre mixture.

## Revendications

1. Procédé de fabrication de sulfate de calcium α semi-hydraté, comprenant les étapes suivantes :
- le mélange d'au moins un déchet contenant du plâtre et d'au moins un plâtre REA avec de l'eau avec ajout d'un acide dicarboxylique pour former une suspension aqueuse,
- le chauffage de la suspension dans un contenant sous pression et le maintien de la suspension chauffée à la température de chauffage, ledit au moins un déchet contenant du plâtre et ledit au moins un plâtre REA étant transformés en sulfate de calcium α semi-hydraté,
- la séparation du sulfate de calcium α semi-hydraté de la suspension ou l'introduction de la suspension dans un procédé pour la fabrication de panneaux de plâtre ou de panneaux de fibres de plâtre.

2. Procédé selon la revendication 1, **caractérisé en ce que** des poussières contenant du plâtre, notamment des poussières de ponçage, de fraisage et de sciage formées lors de l'usinage de panneaux de fibres de plâtre, ou une boue de plâtre broyée, un déchet de fibres de plâtre ou des déchets de plâtre cartonné broyés, ou un mélange des éléments susmentionnés sont utilisés en tant que déchet contenant du plâtre.

3. Procédé selon la revendication 2, **caractérisé en ce qu'**un additif de nucléation, notamment sous la forme de sulfate de calcium α semi-hydraté supplémentaire, est ajouté aux poussières contenant du plâtre.

4. Procédé selon la revendication 2 ou 3, **caractérisé en ce que** le déchet contenant du plâtre utilisé présente une proportion de sulfate de calcium semi-hydraté dans la plage allant de 5 à 70 %, notamment de 10 à 40 %.

5. Procédé selon l'une quelconque des revendications précédentes, **caractérisé en ce que** le chauffage de la suspension a lieu à une température dans la plage allant de 105 à 150 °C, notamment dans la plage allant de 115 à 135 °C, de préférence à 115 °C ou 125 °C.

6. Procédé selon l'une quelconque des revendications précédentes, caractérisé en ce l'acide dicarboxylique, de préférence l'acide succinique, en une proportion dans la plage allant de 0,001 à 1 % en poids, notamment de 0,01 à 0,2 % en poids, par rapport aux solides, est ajouté à la suspension.

7. Procédé selon l'une quelconque des revendications précédentes, **caractérisé en ce que** du sulfate d'aluminium ou du sulfate de fer, de préférence en une proportion dans la plage allant de 0,1 à 2 % en poids, notamment dans la plage allant de 0,3 à 1 % en poids, est ajouté à la suspension.

8. Procédé selon l'une quelconque des revendications précédentes, **caractérisé en ce qu'**au moins un additif à base de protéines, de préférence en une proportion dans la plage allant de 0,01 à 1 % en poids, notamment de 0,01 à 0,5 % en poids, par rapport aux solides, est ajouté à la suspension.

9. Procédé selon l'une quelconque des revendications précédentes, **caractérisé en ce que** la durée de maintien se situe dans la plage allant de 1 à 90 minutes, notamment de 1 à 60 minutes, de préférence de 1 à 45 minutes, notamment de 10 à 20 minutes.

10. Procédé selon l'une quelconque des revendications précédentes, **caractérisé en ce que** le rapport de mélange entre le déchet contenant du plâtre et le plâtre REA utilisé pour le mélange de la suspension est compris entre 10:1 et 1:10, notamment entre 3:1 et 1:3.

11. Procédé selon l'une quelconque des revendications précédentes, **caractérisé en ce que** le chauffage de la suspension contenant des proportions identiques de déchet contenant du plâtre et de plâtre REA n'a lieu qu'après une durée de pré-entreposage déterminée, notamment de 1 à 120 minutes, notamment de 1 à 60 minutes, de préférence de 30 minutes.

12. Procédé selon l'une quelconque des revendications 1 à 10, **caractérisé en ce que** le chauffage de la suspension n'a lieu qu'après une durée de pré-entreposage déterminée, notamment de 1 à 120 minutes, notamment de 1 à 60 minutes, de préférence de 30 minutes.

13. Procédé selon l'une quelconque des revendications précédentes, **caractérisé en ce que** des sels acides, notamment des sels d'acides dicarboxyliques, sont ajoutés à la suspension.

14. Procédé selon l'une quelconque des revendications précédentes, à l'exception de la revendication 7, **caractérisé en ce qu'**un additif influençant la croissance, notamment sous la forme d'au moins un sel métallique, notamment un sel d'aluminium et/ou de fer, est ajouté à la suspension.

15. Procédé selon l'une quelconque des revendications précédentes, **caractérisé en ce que** de l'eau de circuit issue de la fabrication de panneaux de plâtre est utilisée en tant qu'eau pour la formation de la suspension.

16. Procédé selon l'une quelconque des revendications précédentes, **caractérisé en ce qu'**il est réalisé de manière continue ou discontinue.

17. Procédé selon l'une quelconque des revendications précédentes, **caractérisé en ce qu'**au moins un additif supplémentaire du groupe constitué par : les accélérateurs de prise, les adjuvants de déshydratation, les agents antimousse, les fluidifiants, les agents d'hydrophobation, notamment les paraffines ou les siloxanes, de préférence en une proportion de 1 à 3 % en poids, est ajouté à la suspension.

18. Procédé selon l'une quelconque des revendications précédentes, **caractérisé en ce qu'**un additif sous la forme d'un agent ignifuge, de préférence en une proportion de 1 à 20 % en poids, est ajouté.

19. Procédé selon l'une quelconque des revendications précédentes, **caractérisé en ce que** la suspension présente une teneur en solides dans la plage allant de 15 à 70 %, notamment de 35 à 55 %.

20. Procédé selon l'une quelconque des revendications précédentes, **caractérisé en ce que** la suspension de sulfate de calcium α semi-hydraté ou le sulfate de calcium α semi-hydraté séparé de celle-ci est introduit dans un procédé pour la fabrication de panneaux de plâtre ou de panneaux de fibres de plâtre, le sulfate de calcium α semi-hydraté étant incorporé dans un mélange de plâtre ou un mélange de fibres de plâtre, contenant éventuellement du sulfate de calcium semi-hydraté fabriqué autrement, et des panneaux de plâtre ou des panneaux de fibres de plâtre sont fabriquées à partir du mélange de plâtre ou du mélange de fibres de plâtre.

21. Procédé selon la revendication 21, **caractérisé en ce que** la suspension de sulfate de calcium α semi-hydraté est entreposée avant l'incorporation dans le mélange de plâtre ou le mélange de fibres de plâtre dans un contenant agité chauffable, notamment à des températures dans la plage allant de 65 à 100 °C, de préférence dans la plage allant de 85 à 95 °C.
